(19) Europäisches Patentamt
European Patent Office
Office européen des brevets

(11) EP 4 322 641 A1

(12) EUROPEAN PATENT APPLICATION
published in accordance with Art. 153(4) EPC

(43) Date of publication:
14.02.2024 Bulletin 2024/07

(51) International Patent Classification (IPC):
H04W 68/00 (2009.01)

(21) Application number: 22794946.8

(52) Cooperative Patent Classification (CPC):
H04W 68/00; H04W 76/27; H04W 76/34

(22) Date of filing: 27.04.2022

(86) International application number:
PCT/CN2022/089642

(87) International publication number:
WO 2022/228476 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.04.2021 CN 202110481627

(71) Applicant: Huawei Technologies Co., Ltd.
Shenzhen, Guangdong 518129 (CN)

(72) Inventors:
• GENG, Tingting
  Shenzhen, Guangdong 518129 (CN)
• ZHANG, Hongzhuo
  Shenzhen, Guangdong 518129 (CN)
• HU, Xingxing
  Shenzhen, Guangdong 518129 (CN)

(74) Representative: Pfenning, Meinig & Partner mbB
Patent- und Rechtsanwälte
Theresienhöhe 11a
80339 München (DE)

(54) COMMUNICATION METHOD AND DEVICE

(57) This application provides a communication method and apparatus, to resolve a problem of a communication error caused by a change of an inactive radio network temporary identifier (I-RNTI) rule of an access network device. The method includes: A first access network device receives a first message from a second access network device, where the first message indicates that at least two I-RNTI rules of the second access network device remain valid. The first access network device determines, according to at least one valid I-RNTI rule of the second access network device, an access network device corresponding to an I-RNTI of a terminal device, and obtains context information of the terminal device from at least one of the determined access network devices. According to the foregoing solution, that an access network device is omitted when the second access network device is determined based on the I-RNTI can be avoided to some extent, thereby improving a success rate of resuming an RRC connection by the terminal device.

FIG. 7

**Description**

**CROSS-REFERENCE TO RELATED APPLICATIONS**

This application claims priority to Chinese Patent Application No. 202110481627.3, filed with the China National Intellectual Property Administration on April 30, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In new radio (new radio, NR), a radio resource control (radio resource control, RRC) status of a terminal device includes a connected (connected) state, an inactive (inactive) state, and an idle (idle) state. When the terminal device is in the inactive state, an RRC connection is suspended between the terminal device and an access network device, but the terminal device and the access network device store context information of the terminal device.

When configuring the terminal device to enter the inactive state, the access network device sends an inactive radio network temporary identifier (inactive radio network temporary identifier, I-RNTI) to the terminal device. The I-RNTI is used by the access network device to obtain the context information of the terminal device.

The access network device may determine a format of the I-RNTI according to an I-RNTI rule. Generally, the I-RNTI rule of the access network device does not change. However, currently, the I-RNTI rule of the access network device may be changed, and the change of the I-RNTI rule brings a new problem, and a corresponding solution needs to be considered.

**SUMMARY**

This application provides a communication method and apparatus, to resolve a problem of a communication error caused by a change of an I-RNTI rule of an access network device.

According to a first aspect, this application provides a communication method. The method may be applied to an access network device, a chip, a chip group, a function module that is in a chip and that performs the method, or the like. An access network device is used as an example. The method includes: A first access network device receives a first message from a second access network device, where the first message indicates that at least two I-RNTI rules of the second access network device remain valid. The first access network device determines, according to at least one valid I-RNTI rule of the second access network device, an access network device corresponding to an I-RNTI of a terminal device, and obtains context information of the terminal device from at least one of the determined access network devices.

In this embodiment of this application, the first access network device may keep a plurality of I-RNTI rules of the second access network device valid under an instruction of the second access network device, so that the second access network device can be determined according to the plurality of I-RNTI rules when an RRC connection of a terminal device is resumed. This can avoid to some extent that an access network device is omitted when the second access network device is determined based on the I-RNTI, thereby improving a success rate of resuming an RRC connection by the terminal device.

In a possible design, the first access network device receives a second message from the second access network device, where the second message indicates that a second I-RNTI rule is invalid. In the foregoing design, the second access network device may indicate that an I-RNTI rule before update is invalid, so that the first access network device may no longer maintain the I-RNTI rule before update, thereby reducing communication costs of the first access network device.

According to a second aspect, this application provides a communication method. The method may be applied to an access network device, a chip, a chip group, a function module that is in a chip and that performs the method, or the like. An access network device is used as an example. The method includes: A second access network device updates an I-RNTI rule; and the second access network device sends a first message to a first access network device, where the first message indicates that at least two inactive radio network temporary identifier I-RNTI rules of the second access network device remain valid.

In this embodiment of this application, the second access network device may indicate the first access network device to keep a plurality of I-RNTI rules of the second access network device valid, so that the first access network device may determine the second access network device according to the plurality of I-RNTI rules when resuming an RRC connection of a terminal device. This can avoid to some extent that an access network device is omitted when the second access network device is determined based on the I-RNTI, thereby improving a success rate of resuming an RRC connection by the terminal device.

In a possible design, the second access network device sends a second message to the first access network device, where the second message indicates that the second I-RNTI rule is invalid. In the foregoing design, the second access network device may indicate that an I-RNTI rule before update is invalid, so that the first access network device may no longer maintain the I-RNTI rule before update, thereby reducing communication costs of the first access network device.

For the first aspect and the second aspect:
In a possible design, the first message indicates that an updated I-RNTI rule of the second access network device is a first I-RNTI rule, and indicates that a second I-RNTI rule remains valid, where the second I-RNTI rule is an I-RNTI rule before update by the second access network device. In the foregoing design, when an I-RNTI rule is updated, it is indicated that an I-RNTI rule before update remains valid, so that a terminal device that allocates an I-RNTI according to the I-RNTI rule before update can accurately determine an anchor access network device in an RRC resume procedure. This can improve a success rate of resuming an RRC connection by the terminal device.

In a possible design, the first message carries the first I-RNTI rule and first indication information, and the first indication information indicates that the second I-RNTI rule remains valid. According to the foregoing design, it may be explicitly indicated that the I-RNTI rule before update remains valid.

In a possible design, the second I-RNTI rule may include at least two I-RNTI rules. The first message may carry a plurality of pieces of first indication information, and one piece of first indication information may be associated with one or more I-RNTI rules in the second I-RNTI rule. According to the foregoing design, indication accuracy can be improved.

In a possible design, the first message carries the first I-RNTI rule and the second I-RNTI rule. In the foregoing design, when an I-RNTI rule is updated, the I-RNTI rule before update is carried. This can implicitly indicate that the I-RNTI rule before update remains valid.

In a possible design, the first message indicates to add the first I-RNTI rule. According to the foregoing design, the first access network device can maintain the original second I-RNTI rule and the newly added first I-RNTI rule.

In a possible design, the second message carries second indication information, and the second indication information indicates that the second I-RNTI rule is invalid. In this manner, it may be explicitly indicated that the second I-RNTI rule is invalid.

In a possible design, the second I-RNTI rule may include at least two I-RNTI rules. The second message may carry a plurality of pieces of second indication information, and one piece of second indication information may be associated with one or more I-RNTI rules in the second I-RNTI rule. According to the foregoing design, indication accuracy can be improved.

In a possible design, the second message indicates that the first I-RNTI rule remains valid. In this manner, when the second message does not indicate that the second I-RNTI rule is valid, it may be implicitly indicated that the second I-RNTI rule is invalid.

In a possible design, the second message indicates to release/remove the second I-RNTI rule. According to the foregoing design, the first access network device may stop maintaining the second I-RNTI rule by releasing/removing the second I-RNTI rule.

According to a third aspect, this application provides a communication method. The method may be applied to an access network device, a chip, a chip group, a function module that is in a chip and that performs the method, or the like. An access network device is used as an example. The method includes: A second access network device updates an I-RNTI rule. The second access network device sends a first paging message and/or a second paging message, where the first paging message indicates an access network device in a radio access network notification area of a terminal device in an inactive state to page the terminal device in the inactive state, and the second paging message is used by the second access network device to page the terminal device in the inactive state. The second access network device performs at least one of the following: triggering an I-RNTI of a first terminal device in an inactive state to be updated according to an updated I-RNTI rule; triggering a second terminal device in an inactive state to enter an idle state; and sending context information of a third terminal device in an inactive state to a first access network device, where the first access network device is an access network device that receives a paging response sent by the third terminal device.

According to the solution in this embodiment of this application, when updating the I-RNTI rule, the second access network device updates the I-RNTI of the terminal device by paging the terminal device in time, so that the second access network device and the first access network device can maintain a set of I-RNTI rules, thereby reducing complexity of implementation of the access network device.

In a possible design, the first paging message and/or the second paging message carry/carries a paging cause, and the paging cause is an I-RNTI rule change. According to the foregoing design, a communication device that receives the first paging message or the second paging message may obtain the paging cause.

In a possible design, that the second access network device triggers the I-RNTI of the first terminal device in the inactive state to be updated includes: The second access network device allocates an I-RNTI to the first terminal device according to the updated I-RNTI rule. According to the foregoing design, the terminal device in a communication range of a second access network may update the I-RNTI during paging of the second access network device.

In a possible design, that the second access network device triggers the I-RNTI of the first terminal device in the inactive state to be updated includes: The second access network device sends a third message to a third access network device, where the third access network device is an access network device that receives a paging response sent by the first terminal device, and the third message indicates the third access network device to allocate an I-RNTI to the first terminal device. According to the foregoing design, the terminal device in a communication range of a third access network may update the I-RNTI during paging of the third access network device.

In a possible design, the third message is used to carry a cause value that indicates the I-RNTI rule change. According to the foregoing design, the terminal device can determine that the reason for updating the I-RNTI is the I-RNTI rule change.

In a possible design, that the second access network device triggers the second terminal device in the inactive state to enter an idle state includes: The second access network device releases the second terminal device to the idle state. According to the foregoing design, the terminal device in the communication range of the second access network may be released to the idle state during paging of the second access network device.

In a possible design, that the second access network device triggers the second terminal device in the inactive state to enter an idle state includes: The second access network device sends a fourth message to a fourth access network device, where the fourth access network device is an access network device that receives a paging response sent by the second terminal device, and the fourth message indicates the fourth access network device to release the second terminal device to the idle state. According to the foregoing design, the terminal device in a communication range of a fourth access network may be released to the idle state during paging of the fourth access network device.

In a possible design, the fourth message is used to carry a cause value that indicates the I-RNTI rule change. According to the foregoing design, the terminal device can determine that the reason for updating the I-RNTI is the I-RNTI rule change.

According to a fourth aspect, this application provides a communication method. The method may be applied to an access network device, a chip, a chip group, a function module that is in a chip and that performs the method, or the like. An access network device is used as an example. The method includes: A first access network device receives a first paging message from a second access network device, where the first paging message is used to page a terminal device in an inactive state. The first access network device sends a third paging message, where the third paging message is used to page the terminal device in the inactive state. The first access network device performs at least one of the following: updating an I-RNTI of a first terminal device in an inactive state; and releasing a second terminal device in an inactive state to enter an idle state.

According to the solution in this embodiment of this application, when updating the I-RNTI rule, the second access network device updates the I-RNTI of the terminal device by paging the terminal device in time, so that the second access network device and the first access network device can maintain a set of I-RNTI rules, thereby reducing complexity of implementation of the access network device.

In a possible design, the first paging message and/or the second paging message carry/carries a paging cause, and the paging cause is an I-RNTI rule change. According to the foregoing design, a communication device that receives the first paging message or the second paging message may obtain the paging cause.

In a possible design, the method further includes: before that the first access network device updates the I-RNTI of the terminal device in the inactive state, the first access network device receives a third message from the second access network device, where the third message indicates the first access network device to allocate the I-RNTI to the first terminal device. According to the foregoing design, the terminal device in a communication range of a first access network may update the I-RNTI during paging of the first access network device.

In a possible design, the method further includes: before that the first access network device releases the terminal device in the inactive state to enter the idle state, the first access network device receives a fourth message from the second access network device, where the fourth message indicates a fourth access network device to release the second terminal device to the idle state. According to the foregoing design, the terminal device in the communication range of the first access network may be released to the idle state during paging of the first access network device.

In a possible design, the third message is used to carry a cause value that indicates the I-RNTI rule change. According to the foregoing design, the terminal device can determine that the reason for updating the I-RNTI is the I-RNTI rule change.

In a possible design, the fourth message is used to carry a cause value that indicates the I-RNTI rule change. According to the foregoing design, the terminal device can determine that the reason for updating the I-RNTI is the I-RNTI rule change.

According to a fifth aspect, this application provides a communication method. The method may be applied to a terminal device, a chip, a chip group, a function module that is in a chip and that performs the method, or the like. A terminal device is used as an example. The method includes: The terminal device receives a second paging message or a third paging message; and the terminal device enters an idle state or updates an I-RNTI.

According to a sixth aspect, this application provides a communication method. The method may be applied to an access network device, a chip, a chip group, a function module that is in a chip and that performs the method, or the like. An access network device is used as an example. The method includes: A first access network device receives a message 1 from a second access network device, where the first message indicates a first I-RNTI rule of the second access network device. The first access network device determines that the first I-RNTI rule conflicts with an I-RNTI rule of another access network device. The first access network device triggers the second access network device to update the I-RNTI rule.

According to the solution in this embodiment of this application, the first access network device can adjust the I-RNTI rule of the second access network device. For example, when the first access network device finds that an anchor access network device cannot be properly determined according to the I-RNTI rule of the second access network device, the first access network device may assist the second access network device in modifying the I-RNTI rule, so that accuracy of determining the anchor access network device can be improved. This can avoid to some extent that an access network device is omitted when the anchor access network device is determined based on the I-RNTI, thereby improving a success rate of resuming an RRC connection by the terminal device. This can also avoid to some extent determining an excessive quantity of access network devices based on the I-RNTI, thereby reducing signaling overheads.

In a possible design, that the first access network device triggers the second access network device to update the I-RNTI rule includes: The first access network device sends a message 2 to the second access network device, where the message 2 indicates that the second access network device updates the I-RNTI rule. In the foregoing design, the first access network device may indicate, by sending a message, the second access network device to update the I-RNTI rule.

In a possible design, the message 2 carries at least one of the following information: first information and second information, where the first information indicates the second access network device to update the I-RNTI rule, and the second information indicates an update requirement of the I-RNTI rule. According to the foregoing design, update efficiency can be improved.

In a possible design, that the first access network device triggers the second access network device to update the I-RNTI rule includes: The first access network device sends a message 3 to an operation and management (OAM) entity, where the message 3 indicates that I-RNTI rules conflict with each other. In the foregoing design, the OAM entity may manage the I-RNTI rules of the access network device in a unified manner.

In a possible design, the message 3 carries information about the first I-RNTI rule and/or identification information of the second access network device. In the foregoing manner, the OAM entity may determine the I-RNTI rules that conflict with each other.

In a possible design, the message 3 further carries information about an I-RNTI rule of another access network device and/or identification information of the another access network device. In the foregoing manner, the OAM entity may determine the I-RNTI rules that conflict with each other.

In a possible design, the first access network device receives third information from the second access network device, where the third information indicates that the first access network device is allowed to assist the second access network device in adjusting the I-RNTI rule. In the foregoing manner, the first access network device may obtain authorization to assist the second access network device in adjusting the I-RNTI rule.

In a possible design, the first I-RNTI rule includes related information of access network device identification information.

In a possible design, the first I-RNTI rule further indicates at least one of the following: related information of a terminal device identifier, related information of a public land mobile network (public land mobile network, PLMN), related information of a radio access technology/system, and related information of an I-RNTI rule.

In a possible design, the first I-RNTI rule corresponds to a quantity of bits of the I-RNTI or a length type of the I-RNTI.

According to a seventh aspect, this application provides a communication method. The method may be applied to an access network device, a chip, a chip group, a function module that is in a chip and that performs the method, or the like. An access network device is used as an example, the method includes: A second access network device sends a message 1 to a first access network device, where the message 1 indicates a first I-RNTI rule of the second access network device; and the second access network device receives a message 2 from the first access network device, where the message 2 indicates the second access network device to update an I-RNTI rule.

According to the solution in this embodiment of this application, the first access network device can adjust the I-RNTI rule of the second access network device. For example, when the first access network device finds that the anchor access network device cannot be properly determined according to the I-RNTI rule of the second access network device, the first access network device may assist the second access network device in modifying the I-RNTI rule, so that accuracy of determining the anchor access network device can be improved. This can avoid to some extent that an access network device is omitted when the anchor access network device is determined based on an I-RNTI, thereby improving a success rate of resuming an RRC connection by the terminal device. This can also avoid to some extent determining an excessive quantity of access network devices based on the I-RNTI, thereby reducing signaling overheads.

In a possible design, the method further includes: The second access network device sends third information to the first access network device, where the third information indicates that the first access network device is allowed to assist the second access network device in adjusting the I-RNTI rule. In the foregoing manner, the first access network device may obtain authorization to assist the second access network device in adjusting the I-RNTI rule.

In a possible design, the message 2 carries at least one of the following information: first information and second information, where the first information indicates the second access network device to update the I-RNTI rule, and the second information indicates an update requirement of the I-RNTI rule. According to the foregoing design, update efficiency can be improved.

In a possible design, the first I-RNTI rule includes related information of access network device identification information.

In a possible design, the first I-RNTI rule indicates at least one of the following: related information of a terminal device identifier, related information of a PLMN, related information of a radio access technology/system, and related information of an I-RNTI rule.

In a possible design, the first I-RNTI rule indicates a quantity of bits of an I-RNTI or a length type of the I-RNTI.

According to an eighth aspect, this application provides a communication method. The method may be applied to an OAM entity, a chip, a chip group, a function module that is in a chip and that performs the method, or the like. An OAM entity is used as an example. The method includes: The OAM entity receives a message 3 from a first access network device, where the message 3 indicates that inactive radio network temporary identifier I-RNTI rules conflict with each other; and the OAM entity updates the I-RNTI rules that conflict with each other.

According to the solution in this embodiment of this application, the first access network device can adjust the I-RNTI rule of the second access network device. For example, when the first access network device finds that an anchor access network device cannot be properly determined according to the I-RNTI rule of the second access network device, the first access network device may assist the second access network device in modifying the I-RNTI rule, so that accuracy of determining the anchor access network device can be improved. This can avoid to some extent that an access network device is omitted when the anchor access network device is determined based on an I-RNTI, thereby improving a success rate of resuming an RRC connection by the terminal device. This can also avoid to some extent determining an excessive quantity of access network devices based on the I-RNTI, thereby reducing signaling overheads.

In a possible design, the message 3 carries information about a first I-RNTI rule and/or identification information of the second access network device. In the foregoing manner, the OAM entity may determine the I-RNTI rules that conflict with each other.

In a possible design, that the OAM entity updates the I-RNTI rules that conflict with each other includes: The OAM entity updates the I-RNTI rule of the second access network device; and the OAM entity sends an updated I-RNTI rule to the second access network device.

In a possible design, the message 3 further carries information about a second I-RNTI rule that conflicts with the first I-RNTI rule, and/or identification information of a third access network device corresponding to the second I-RNTI rule. In the foregoing manner, the OAM entity may determine the I-RNTI rules that conflict with each other.

In a possible design, that the OAM entity updates the I-RNTI rules that conflict with each other includes: The OAM entity updates an I-RNTI rule of the third access network device; and the OAM entity sends an updated I-RNTI rule to the third access network device.

According to a ninth aspect, this application provides a communication method. The method may be applied to an access network device, a chip, a chip group, a function module that is in a chip and that performs the method, or the like. An access network device is used as an example. The method includes: A first access network device receives an RRC resume request from a terminal device, where the RRC resume request carries an I-RNTI of the terminal device, and the I-RNTI indicates a corresponding I-RNTI rule; the first access network device determines, according to the I-RNTI rule, an access network device corresponding to the I-RNTI; and the first access network device obtains context information of the terminal device from the access network device.

In this embodiment of this application, the I-RNTI of the terminal device indicates the corresponding I-RNTI rule, so that the first access network device can determine, according to the indicated I-RNTI rule, access network device information carried in the I-RNTI, thereby improving accuracy of resuming the RRC connection by the terminal device.

In a possible design, if a first bit of the I-RNTI is a first value, the I-RNTI indicates an I-RNTI rule before update by the second access network device; or if a first bit of the I-RNTI is a second value, the I-RNTI indicates an updated I-RNTI rule of the second access network device. In the foregoing design, one or more bits are obtained from the I-RNTI through division, so that a corresponding I-RNTI rule may be indicated by the one or more bits.

According to a tenth aspect, this application provides a communication method. The method may be applied to an access network device, a chip, a chip group, a function module that is in a chip and that performs the method, or the like. An access network device is used as an example. The method includes: A second access network device determines an I-RNTI rule; and the second access network device determines an I-RNTI of a terminal device according to the I-RNTI rule, where the I-RNTI indicates a corresponding I-RNTI rule.

In this embodiment of this application, the I-RNTI of the terminal device indicates the corresponding I-RNTI rule, so that the first access network device can determine, according to the indicated I-RNTI rule, access network device information carried in the I-RNTI, thereby improving accuracy of resuming the RRC connection by the terminal device.

In a possible design, if a first bit of the I-RNTI is a first value, the I-RNTI indicates an I-RNTI rule before update by the second access network device; or if a first bit of the I-RNTI is a second value, the I-RNTI indicates an updated I-RNTI rule of the second access network device. In the foregoing design, one or more bits are obtained from the I-RNTI through division, so that a corresponding I-RNTI rule may be indicated by the one or more bits.

According to an eleventh aspect, this application provides a communication method. The method may be applied to a terminal device, a chip, a chip group, a function module that is in a chip and that performs the method, or the like. A terminal device is used as an example. The method includes:

The terminal device receives configuration information from a second access network device, where the configuration information carries an I-RNTI allocated by the second access network device to the terminal device, and the I-RNTI indicates a corresponding I-RNTI rule; and the terminal device sends an RRC resume request to a first access network device, where the RRC resume request carries the I-RNTI of the terminal device, and the I-RNTI indicates the corresponding I-RNTI rule.

In this embodiment of this application, the I-RNTI of the terminal device indicates the corresponding I-RNTI rule, so that the first access network device can determine, according to the indicated I-RNTI rule, access network device information carried in the I-RNTI, thereby improving accuracy of resuming the RRC connection by the terminal device.

In a possible design, if a first bit of the I-RNTI is a first value, the I-RNTI indicates an I-RNTI rule before update by the second access network device; or if a first bit of the I-RNTI is a second value, the I-RNTI indicates an updated I-RNTI rule of the second access network device. In the foregoing design, one or more bits are obtained from the I-RNTI through division, so that a corresponding I-RNTI rule may be indicated by the one or more bits.

According to a twelfth aspect, this application provides an apparatus. The apparatus may be a communication device, or may be a chip or a chip group in a communication device. The communication device may be a terminal device, an access network device, or an OAM entity. The apparatus may include a processing module and a transceiver module. When the apparatus is a communication device, the processing module may be a processor, and the transceiver module may be a transceiver. The apparatus may further include a storage module, and the storage module may be a memory. The storage module is configured to store instructions and/or data. The processing module reads the instructions and/or the data stored in the storage module, so that the access network device performs corresponding functions in any one of the first aspect to the fourth aspect, the sixth aspect and the seventh aspect, and the ninth aspect and the tenth aspect, or the processing module executes the instructions stored in the storage module, so that the terminal device performs corresponding functions in the fifth aspect, or the processing module executes the instructions stored in the storage module, so that the OAM entity performs a corresponding function in the eighth aspect. When the apparatus is a chip or a chip group in a communication device, the processing module may be a processor, and the transceiver module may be an input/output interface, a pin, a circuit, or the like. The processing module executes the instructions stored in the storage module, to perform corresponding functions in any one of the first aspect to the fourth aspect, the sixth aspect and the seventh aspect, or the ninth aspect and the tenth aspect, or to perform corresponding functions in the fifth aspect, or perform corresponding functions in the eighth aspect. The storage module may be a storage module (for example, a register or a cache) in the chip or the chip group, or may be a storage module (for example, a read-only memory or a random access memory) outside the chip or the chip group.

According to a thirteenth aspect, an apparatus is provided, including a processor, a communication interface, and a memory. The communication interface is configured to transmit information, and/or a message, and/or data between the apparatus and another apparatus. The memory is configured to store computer-executable instructions. When the apparatus runs, the processor executes the computer-executable instructions stored in the memory, so that the apparatus performs the method according to any one of the first aspect to the tenth aspect or any one of the first aspect to the tenth aspect.

According to a fourteenth aspect, this application further provides a system. The system includes a first access network device implementing any design of the first aspect and a second access network device implementing any design of the second aspect.

According to a fifteenth aspect, this application further provides a system. The system includes a first access network device implementing any design of the third aspect, and a second access network device implementing any design of the fourth aspect, and may further include a terminal device implementing the fifth aspect.

According to a sixteenth aspect, this application further provides a system. The system includes a first access network device implementing any design of the sixth aspect and a second access network device implementing any design of the seventh aspect.

According to a seventeenth aspect, this application further provides a system. The system includes a first access network device implementing any design of the sixth aspect, and an OAM entity implementing any design of the eighth aspect, and may further include a second access network device.

According to an eighteenth aspect, this application further provides a computer-readable storage medium. The computer-readable storage medium stores instructions; and when the instructions are run on a computer, the computer performs the method according to the foregoing aspects.

According to a nineteenth aspect, this application further provides a computer program product including instructions. When the computer program product runs on a computer, the computer performs the methods according to the foregoing aspects.

**BRIEF DESCRIPTION OF DRAWINGS**

FIG. 1 is a schematic diagram of a structure of an access network device according to an embodiment of this application;

FIG. 2 is a schematic diagram of a structure of another access network device according to an embodiment of this application;

FIG. 3 is a schematic flowchart of resuming an RRC connection by a terminal device according to an embodiment of this application;

FIG. 4 is a schematic flowchart of updating an I-RNTI rule according to an embodiment of this application;

FIG. 5 is a schematic flowchart of updating an I-RNTI rule according to an embodiment of this application;

FIG. 6 is a schematic flowchart of updating an I-RNTI rule according to an embodiment of this application;

FIG. 7 is a schematic flowchart of a communication method according to an embodiment of this application;

FIG. 8 is a schematic flowchart of a communication method according to an embodiment of this application;

FIG. 9 is a schematic flowchart of a communication method according to an embodiment of this application;

FIG. 10 is a schematic flowchart of a communication method according to an embodiment of this application;

FIG. 11 is a schematic diagram of a structure of a communication apparatus according to an embodiment of this application; and

FIG. 12 is a schematic diagram of a structure of a communication apparatus according to an embodiment of this application.

**DESCRIPTION OF EMBODIMENTS**

To make objectives, technical solution, and advantages of embodiments of this application clearer, the following further describes embodiments of this application in detail with reference to accompanying drawings.

Network elements in embodiments of this application include an access network device and a terminal device.

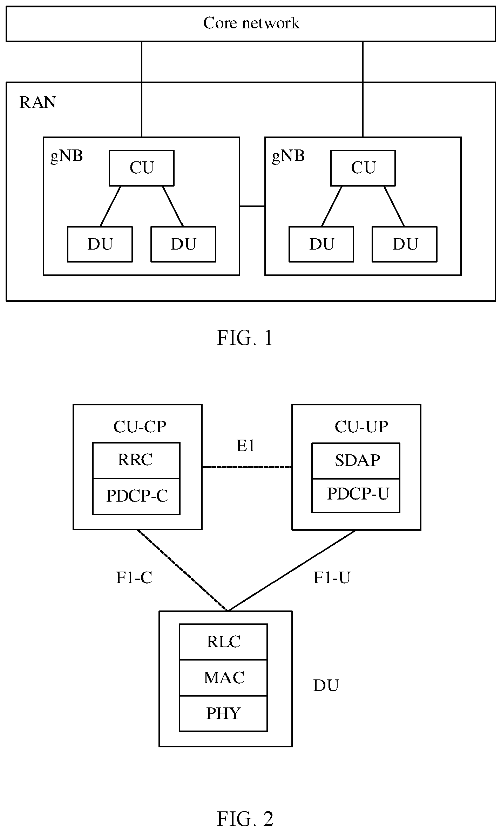

The access network device is an entity configured to transmit or receive a signal on a network side, for example, a next generation base station (generation NodeB, gNodeB or gNB). The access network device may be a device configured to communicate with a mobile device. The access network device may be an access point (access point, AP) in a wireless local area network (wireless local area networks, WLAN), or may be an evolved NodeB (evolved NodeB, eNB, or eNodeB) in long term evolution (long term evolution, LTE), or a relay station, an access point, or an integrated access and backhaul (integrated access and backhaul, IAB) node, or an in-vehicle device, a wearable device, or an access network device in a 5G network, or an access network device in a future evolved public land mobile network (public land mobile network, PLMN) network, or a gNB in a new radio (new radio, NR) system. In addition, in embodiments of this application, the access network device provides a service for a cell, and the terminal device communicates with the access network device by using a transmission resource (for example, a frequency domain resource or a spectrum resource) used by the cell. The access network device in embodiments of this application may be a central unit (central unit, CU) or a distributed unit (distributed unit, DU). Alternatively, the access network device may include a CU and a DU, for example, as shown in FIG. 1. The CU and the DU may be physically separated, or may be deployed together. This is not specifically limited in embodiments of this application. One CU may be connected to one DU, or a plurality of DUs may share one CU, so that costs can be reduced and network expansion is easy. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, media access control (media access control, MAC) layer, and physical layer are deployed on the DU. Embodiments of this application are not completely limited to the foregoing protocol stack splitting manner, and there may be another splitting manner. The CU and the DU are connected through an F1 interface. The CU indicates that a gNB is connected to a core network through an Ng interface. The access network device in embodiments of this application may be a central unit control plane (CU-CP) node or a central unit user plane (CU-UP) node. Alternatively, the network device may be a CU-CP and a CU-UP. The CU-CP is responsible for a control plane function, and mainly includes RRC and PDCP-C. PDCP-C is responsible for encryption and decryption, integrity protection, data transmission, and the like of control plane data. The CU-UP is responsible for a user plane function, and mainly includes SDAP and PDCP-U. SDAP is responsible for processing data of the core network and mapping a flow (flow) to a bearer. PDCP-U is responsible for data plane encryption and decryption, integrity protection, header compression, sequence number maintenance, data transmission, and the like. The CU-CP and the CU-UP are connected through an E1 interface. The CU-CP indicates that the gNB is connected to the core network through an Ng interface, and is connected to the DU through an F1-C (control plane) interface. The CU-UP is connected to the DU through an F1-U (user plane) interface. Certainly, in another possible implementation, the PDCP-C is alternatively in the CU-UP. As shown in FIG. 2, the access network device mentioned in embodiments of this application may be a device including a CU, a DU, a device including a CU and a DU, or a device including a control plane CU node (CU-CP node), a user plane CU node (CU-UP node), and a DU node. In addition, in another possible case, the access network device may be another apparatus that provides a wireless communication function for the terminal device. A specific technology and a specific device form used by the access network device are not limited in embodiments of this application. For ease of description, in embodiments of this application, an apparatus that provides a wireless communication function for a terminal device is referred to as an access network device.

The terminal device may be a terminal device that can receive scheduling and indication information of an access network device. The terminal device may be a device that provides a user with voice and/or data connectivity, a handheld device with a wireless connection function, or another processing device connected to a wireless modem. The terminal device may communicate with one or more core networks or the Internet through a radio access network (for example, a radio access network, RAN). The terminal device may be a mobile terminal device, such as a mobile phone (or referred to as a "cellular" phone, or a mobile phone (mobile phone)), a computer, or a data card, for example, may be a portable, pocket-sized, handheld, computer builtin, or vehicle-mounted mobile apparatus, and exchange language and/or data with the radio access network. For example, the terminal device is a device such as a personal communication service (personal communications service, PCS) telephone, a cordless telephone, a session initiation protocol (SIP) telephone, a wireless local loop (wireless local loop, WLL) station, a personal digital assistant (personal digital assistant, PDA), a tablet computer (Pad), and a computer with a wireless transceiver function. The terminal device may also be referred to as a system, a subscriber unit (subscriber unit), a subscriber station (subscriber station), a mobile console (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), and the like. Alternatively, the terminal device may be a wearable device and a next-generation communication system, for example, a terminal device in a 5G network, a terminal device in a future evolved PLMN network, or a terminal device in an NR communication system.

In addition, embodiments of this application may also be applicable to other futureoriented communication technologies. A network architecture and a service scenario described in this application are intended to describe technical solutions of this application more clearly, and do not constitute a limitation on the technical solutions provided in this application. A person of ordinary skill in the art may know that, with evolution of the network architecture and emergence of a new service scenario, the technical solutions provided in this application are also applicable to similar technical problems.

It may be understood that in embodiments of this application, a terminal device and/or a network device may perform some or all of steps in embodiments of this application. These steps or operations are merely examples. In embodiments of this application, other operations or variations of various operations may be further performed. In addition, the steps may be performed in different sequences presented in embodiments of this application, and not all the operations in embodiments of this application may need to be performed.

It should be noted that a type and a standard of the foregoing communication system are not limited in embodiments of this application. For example, the communication system may be a 5G communication system, an LTE communication system, a 6G communication system, or a non-terrestrial network (non-terrestrial network, NTN) system.

In NR, an RRC status of a terminal device includes a connected state, an inactive state, and an idle state. When the terminal device is in the inactive state, an RRC connection is suspended between the terminal device and an access network device, but the terminal device and the access network device store context information of the terminal device.

When configuring the terminal device to enter the inactive state, the access network device sends an I-RNTI to the terminal device. The I-RNTI is used by the access network device to obtain the context information of the terminal device. For example, the I-RNTI corresponds to context information of the terminal device on an anchor access network device, and the context information of the terminal device may be found by using the I-RNTI. For example, the I-RNTI currently has two lengths: one is 40 bits (bit), which is generally referred to as a full I-RNTI (full I-RNTI), and the other is 24 bits, which is generally referred to as a short I-RNTI (short I-RNTI). Information in the I-RNTI may include an identifier of the terminal device and an identifier of the access network device (for example, an identifier of the anchor access network device). In embodiments of this application, an example in which the I-RNTI has two lengths is used for description, and a length of the I-RNTI is not limited.

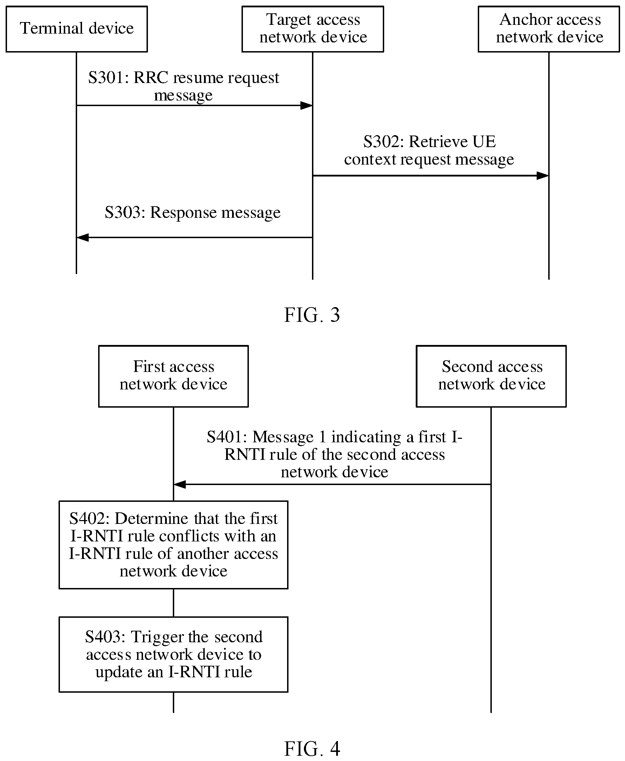

When there is a service requirement (for example, the terminal device needs to send uplink data, or receives a paging message), the terminal device in the inactive state initiates an RRC resume process. As shown in FIG. 3, an RRC resume process may be as follows.

S301: A terminal device sends an RRC resume request (RRC resume request) message to a target access network device.

The RRC resume request message carries an I-RNTI of the terminal device.

The target access network device is an access network device to which the terminal device initiates RRC resume.

S302: The target access network device sends a request message for obtaining context of the terminal device (Retrieve UE context request) to the anchor access network device.

The Retrieve UE context request message carries the I-RNTI of the terminal device.

The anchor access network device is an access network device that configures the terminal device to enter an inactive state, and may also be referred to as a source access network device.

Specifically, the target access network device may determine the anchor access network device based on identification information of the anchor access network device in the I-RNTI, and then send the Retrieve UE context request message to the anchor access network device. For example, the target access network device may determine corresponding global access network device identification information based on the identification information of the anchor access network device in the I-RNTI, to determine the corresponding anchor access network device.

S303: The anchor access network device sends a response message to the target access network device.

The response message may be a retrieve UE context response (Retrieve UE context response) message, and the Retrieve UE context response message carries context information of the terminal device. In this scenario, it may be considered that the target access network device successfully finds an access network device corresponding to the I-RNTI.

Alternatively, the response message may be a Retrieve UE context failure (Retrieve UE context failure) message. If the anchor access network device fails to verify the terminal device, the anchor access network device may send the Retrieve UE context failure message. In this scenario, it may be considered that the target access network device fails to find the access network device corresponding to the I-RNTI, that is, fails to find the anchor access network device.

Alternatively, the response message may be a Retrieve UE context failure (Retrieve UE context failure) message. If the anchor access network device successfully verifies the terminal device, but determines to continue to maintain the context information of the terminal device or determine to release the terminal device to an idle state, the anchor access network device may send the Retrieve UE context failure message. In this case, the Retrieve UE context failure message carries an RRC release (RRC Release) message generated by the anchor access network device, and the target access network device may transparently transmit or forward the RRC release message to the terminal device. In this scenario, it may be considered that the target access network device successfully finds an access network device corresponding to the I-RNTI.

The access network device may determine a format of the I-RNTI according to an I-RNTI rule. Currently, the I-RNTI rule of the access network device may be changed. Consequently, an error easily occurs when the access network device performs an RRC resume procedure on the terminal device based on the I-RNTI.

Based on this, embodiments of this application provide a communication method and apparatus, to resolve a problem that a communication error is caused by a change of an I-RNTI rule of an access network device. The method and the apparatus are conceived based on a same invention. The method and the apparatus have similar principles for resolving the problems. Therefore, for implementation of the apparatus and the method, reference may be made to each other, and details of repeated parts are not described.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. A character "/" generally indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b and c, where a, b, and c may be a singular or plural number.

It should be noted that, in descriptions of this application, terms such as "first" and "second" are only used for distinguishing the descriptions, and cannot be understood as an indicating or implying relative importance or indicating or implying a sequence.

The "I-RNTI rule" in embodiments of this application may also be referred to as an "I-RNTI format", an "I-RNTI division rule", an "I-RNTIreference profile (I-RNTIreference profile)", or the like, and certainly may alternatively be named as another. Provided that information may have a feature of determining an I-RNTI format, the information may be considered as the "I-RNTI rule" in embodiments of this application.

In this embodiment of this application, the target access network device is an access network device to which the terminal device initiates an RRC resume. The source access network device is an access network device that configures the terminal device to enter an inactive state, or an access network device that is last connected to the terminal device before the terminal device enters the inactive state. The source access network device may also be referred to as an anchor access network device.

The following describes in detail the communication method provided in this application with reference to the accompanying drawings.

Embodiment 1:

FIG. 4 shows a communication method according to an embodiment of this application. The method may include the following detailed steps:

S401: A second access network device sends a message 1 to a first access network device, where the message 1 indicates a first I-RNTI rule of the second access network device.

Correspondingly, the first access network device receives the message 1 from the second access network device.

In a possible embodiment, after updating the I-RNTI rule, the second access network device may send the message 1 to the first access network device, to indicate that an updated I-RNTI rule is the first I-RNTI rule.

In an example description, in a procedure of resuming an RRC connection by a terminal device, the first access network device may be a target access network device to which the terminal device initiates an RRC resume procedure, and the second access network device may be a source access network device that stores context information of the terminal device.

The first I-RNTI rule may be used by the first access network device to determine access network device identification information carried in an I-RNTI.

For example, the first I-RNTI rule may include related information of the access network device identification information, and the related information of the access network device identification information is used by the first access network device to determine the access network device identification information carried in the I-RNTI.

In an example, the related information of the access network device identification information indicates a quantity of bits of the access network device identification information. For example, the related information of the access network device identification information may be a specific value, for example, 20 bits or 12 bits. Alternatively, the related information of the access network device identification information may be a relative value, for example, half, $\frac{1}{2}$, $\frac{1}{3}$, or $\frac{2}{5}$. The relative value may be that indicates a proportion relationship between the quantity of bits of the access network device identification information and a quantity of bits of the global access network device identification information. For example, the related information of the access network device identification information may be 3, and the quantity of bits indicating the access network device identification information is 3 of the quantity of bits of the global access network device identification information.

The access network device identification information carried in the I-RNTI may also be referred to as local access network device identification information, for example, a local RAN node ID. The global access network device identification information may be a global RAN node ID.

Optionally, a bit location of the access network device identification information in the global access network device identification information may be determined by the first access network device according to the first RNTI rule, or may be preset, or specified in a protocol.

In the foregoing example, the first access network device may determine access network device identification information of the second access network device based on the related information of the access network device identification information and global access network device identification information of the second access network device.

In another example, the related information of the access network device identification information may be access network device identification information of the second access network device.

In addition, the first I-RNTI rule may further include at least one of the following: related information of a terminal device identifier, related information of a public land mobile network (public land mobile network, PLMN), related information of a radio access technology/system, and related information of an I-RNTI rule.

For example, the related information of a terminal device identifier indicates a quantity of bits of terminal device identifier information. The related information of a PLMN indicates a quantity of bits of PLMN information. The related information of a radio access technology/system indicates a quantity of bits of the radio access technology/system information. The related information of an I-RNTI rule indicates an I-RNTI rule sequence number or a quantity of bits of index information.

Optionally, the first I-RNTI rule corresponds to a quantity of bits of the I-RNTI or a length type of the I-RNTI. The message 1 may indicate the length type of the I-RNTI and the corresponding first I-RNTI rule.

In a possible example, the message 1 indicates the following I-RNTI rule information:

| Message 1 | |
| --- | --- |
| > First I-RNTI rule corresponding to a full I-RNTI | When a length of the I-RNTI is 40 bits, a length of a corresponding local RAN node ID is 20 bits |
| > First I-RNTI rule corresponding to a short I-RNTI | When a length of the I-RNTI is 24 bits, a length of a corresponding local RAN node ID is 12 bits |

When a length of the I-RNTI is 40 bits, the first I-RNTI rule may indicate that a local RAN node ID is 20 bits. It is assumed that a protocol specifies that a least significant bit of the global RAN node ID carries the local RAN node ID, and the first access network device may determine the local RAN node ID based on length information of the local RAN node ID in the first I-RNTI rule and a global RAN node ID of the second access network device. It is alternatively assumed that a protocol specifies that a least significant bit of the I-RNTI carries the local RAN node ID. In this case, the first access network device may determine that when the length of the I-RNTI is 40 bits, the first 20 bits of the I-RNTI in ascending order are the local RAN node ID. According to the foregoing mechanism, the first access network device can determine a local RAN node ID of the second access network device, and determine the local RAN node ID in the received I-RNTI. If the two local RAN node IDs are the same, the first access network device may determine, based on the corresponding global RAN node ID, that the second access network device may be a source/anchor network device of the terminal device corresponding to the I-RNTI. When the length of the I-RNTI is 24 bits, the first I-RNTI rule may indicate that the local RAN node ID is 12 bits. For an operation corresponding to the first access network device, refer to a description when the length of the I-RNTI is 24 bits. Details are not described herein again.

In this example, the second access network device may indicate a length of full local access network device identification information and/or a length of short local access network device identification information to the first access network device.

In another possible example, the first I-RNTI rule may carry specific content of the local RAN node ID. For example, the message 1 may indicate the following I-RNTI rule information:

| Message 1 | |
| --- | --- |
| > Full local RAN node ID | Local RAN node ID corresponding to the I-RNTI whose length is 40 bits, for example, a local RAN node ID 1-1 |
| > Short local RAN node ID | Local RAN node ID corresponding to the I-RNTI whose length is 24 bits, for example, a local RAN node ID1-2 |

When a length of the I-RNTI is 40 bits, the first I-RNTI rule carries a full local RAN node ID of the second access network device, for example, denoted as the local RAN node ID 1-1, where the local RAN node ID 1-1 is a local RAN node ID that is of the second access network device and whose length is 20 bits. When a length of the I-RNTI is 24 bits, the first I-RNTI rule carries a short local RAN node ID of the second access network device, for example, denoted as the local RAN node ID 1-2, where the local RAN node ID 1-2 is a local RAN node ID that is of the second access network device and whose length is 12 bits.

In this example, the second access network device may indicate full local access network device identification information and/or short local access network device identification information to the first access network device. Optionally, the second access network device may indicate a length of full local access network device identification information and/or a length of short local access network device identification information to the first access network device.

It should be understood that the following "I-RNTI rule" is similar to the "first I-RNTI rule". For details, refer to related descriptions of the foregoing first I-RNTI rule. Repeated content is not described again.

In an example description, a manner in which the message 1 indicates the first I-RNTI rule may be: carrying specific content of the first I-RNTI rule, or the message 1 may carry a sequence number, index information, or an identifier of the first I-RNTI rule. Optionally, the I-RNTI rule corresponding to the sequence number, the identifier, or the index information may be predefined in a protocol, or may be interacted between access network devices, or may be obtained by the access network device from another network device (for example, an operation and management (operation and management, OAM) device). For example, a protocol defines a plurality of I-RNTI rules, each I-RNTI rule corresponds to an index, and the message 1 may carry an index of the first I-RNTI rule.

In an example description, the message 1 is an interface setup request message, for example, an X2 setup request message, an Xn setup request message, or another message.

Optionally, after S401, S402 may be performed.

S402: The first access network device determines that the first I-RNTI rule conflicts with an I-RNTI rule of another access network device.

In a possible implementation, when determining, according to the first I-RNTI rule, that the local access network device identification information carried in the I-RNTI is associated with N possible access network devices, the first access network device determines that the first I-RNTI rule conflicts with an I-RNTI rule of an access network device other than the second access network device in the plurality of possible access network devices, where N is an integer greater than 1. Optionally, N may be preset, or may be specified in a protocol, or may be determined by the first access network device. For example, the first access network device determines a value of N based on a capability of the first access network device. In this case, S403 may be performed.

In some embodiments, before step S402, the second access network device may send third information to the first access network device, where the third information indicates whether the first access network device is allowed to assist the second access network device in adjusting the I-RNTI rule.

For example, "allowing the first access network device to assist the second access network device in adjusting the I-RNTI rule" may be understood as allowing the first access network device to determine whether the I-RNTI rule of the second access network device conflicts with an I-RNTI rule of another access network device. Alternatively, it may be understood that the first access network device is allowed to perform S403 when the I-RNTI rule of the second access network device conflicts with an I-RNTI rule of another access network device.

It may be understood that, if the first access network device determines that the first I-RNTI rule does not conflict with the I-RNTI rule of the another access network device, the first access network device may maintain the first I-RNTI rule of the second access network device. Therefore, when the terminal device initiates an RRC resume procedure to the first access network device, the first access network device may determine, according to the first I-RNTI rule, the local access network device identification information carried in the I-RNTI of the terminal device, to determine the second access network device based on the local access network device identification information.

Optionally, in S403, the first access network device triggers the second access network device to update the I-RNTI rule.

In an implementation, the first access network device may send a message 2 to the second access network device, where the message 2 indicates the second access network device to update the I-RNTI rule.

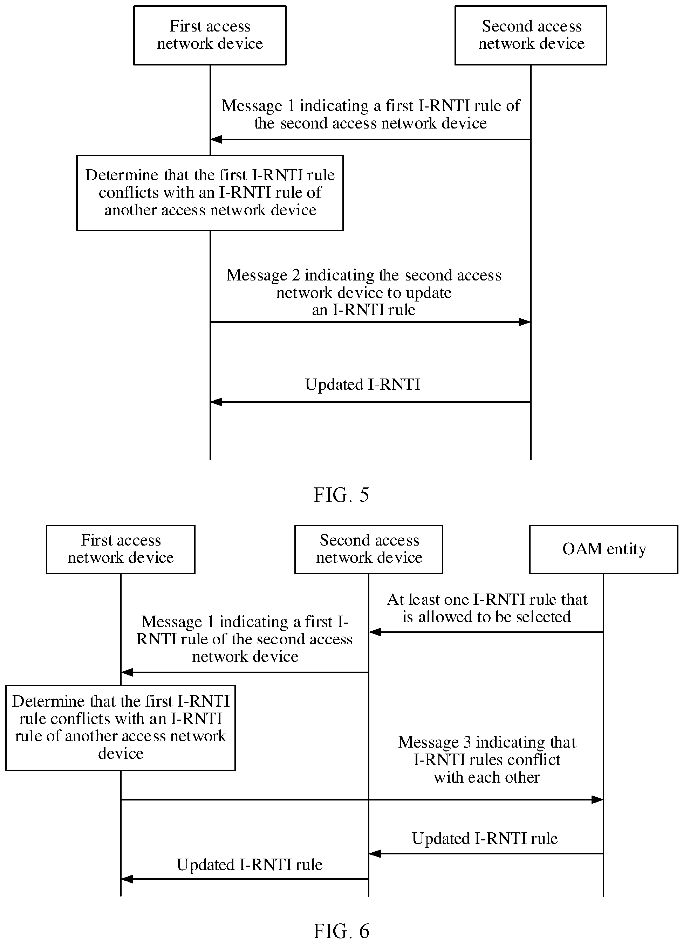

In this implementation, after receiving the message 2, the second access network device may send an updated I-RNTI rule to the first access network device. As shown in FIG. 5,

for example, the message 2 carries at least one of the following information: first information and second information, where the first information indicates the second access network device to update the I-RNTI rule, and the second information indicates an update requirement of the I-RNTI rule.

In a possible implementation, a process in which the second access network device updates the I-RNTI rule may be as follows: After receiving the message 2, the second access network device may re-determine a current I-RNTI rule, and notify the first access network device. The first access network device may re-determine whether the I-RNTI rule conflicts with an I-RNTI rule of another access network device, and if the I-RNTI rule conflicts with the I-RNTI rule of the another access network device, notify the second access network device until the I-RNTI rule of the second access network device does not conflict with the I-RNTI rule of the another access network device.

The update requirement of the I-RNTI rule may include specific content of the I-RNTI rule, for example, an I-RNTI rule expected by the first access network device. Alternatively, the update requirement of the I-RNTI rule may include a constraint condition of the I-RNTI rule, for example, a condition that an I-RNTI rule expected by the first access network device needs to meet.

In a possible implementation, the first access network device determines the update requirement of the I-RNTI rule according to an I-RNTI rule that conflicts with the first I-RNTI rule.

In another possible implementation, the first access network device may alternatively determine the update requirement of the I-RNTI rule according to an I-RNTI rule (including an I-RNTI rule of the first access network device and an I-RNTI rule of another access network device) maintained by the first access network device.

In another implementation, the first access network device may send a message 3 to an operation and management (Operation and management, OAM) entity, where the message 3 indicates that I-RNTI rules conflict with each other.

For example, the message 3 may carry information about the first I-RNTI rule. For example, the message 3 may carry specific content of the first I-RNTI rule, or may carry identification information such as a sequence number and an index of the first I-RNTI rule.

Alternatively, the message 3 may carry identification information of the second access network device. In a possible example, the OAM entity stores a correspondence between an access network device and an I-RNTI rule, and the OAM may determine, based on the identification information of the second access network device carried in the message 3, I-RNTI rules that conflicts with each other.

Alternatively, the message 3 may carry information about the first I-RNTI rule and identification information of the second access network device.

In addition, the message 3 may further carry at least one of information about an I-RNTI rule of another access network device and identification information of the another access network device. The another access network device is an access network device whose I-RNTI rule conflicts with the I-RNTI rule of the second access network device, for example, a third access network device.

In this implementation, after receiving the message 3, the OAM entity may update the I-RNTI rule in conflict, so that the I-RNTI rule of the second access network device does not conflict with an I-RNTI rule of another access network device.

For example, in an example in which the I-RNTI rule of the second access network device conflicts with an I-RNTI rule of the third access network device, the OAM entity may update the I-RNTI rule of the second access network device, and send an updated I-RNTI rule to the second access network device, where the updated I-RNTI rule of the second access network device does not conflict with the I-RNTI rule of the third access network device.

Further, the second access network device may send the updated I-RNTI rule to the first access network device.

For another example, for example, the I-RNTI rule of the second access network device conflicts with an I-RNTI rule of the third access network device. The OAM entity may update the I-RNTI rule of the third access network device, and send an updated I-RNTI rule to the third access network device, where the updated I-RNTI rule of the third access network device does not conflict with the I-RNTI rule of the second access network device.

For another example, the OAM entity may further update the I-RNTI rule of the second access network device and an I-RNTI rule of the third access network device, so that an updated I-RNTI rule of the second access network device does not conflict with an updated I-RNTI rule of the third access network device.

In the foregoing another implementation, before step S401, the OAM entity may send, to the second access network device, at least one I-RNTI rule that is allowed to be selected. The second access network device may determine, according to the at least one I-RNTI rule, the first I-RNTI rule as the current I-RNTI rule of the second access network device, as shown in FIG. 6. Optionally, this embodiment of this application may be applied to interaction of an I-RNTI rule between neighboring access network devices. It should be understood that a process in which the second access network device sends the I-RNTI rule to the first access network device is described in Embodiment 1 of this application. The first access network device and the second access network device may send I-RNTI rules to each other, and details are not repeated. In an example description, after receiving the first I-RNTI rule of the second access network device, the first access network device may send a current I-RNTI rule of the first access network device to the second access network device. For example, the first access network device receives the message 1 sent by the second access network device. The first access network device sends a message 4 to the second access network device. The message 4 carries the current I-RNTI rule of the first access network device. For example, the message 1 may be an interface setup request message, and the message 4 is an interface setup response message. For example, the message 1 may be an X2 setup request message, an Xn setup request message, or another request message. Correspondingly, the message 4 may be an X2 setup response message, an Xn setup response message, or another response message.

According to the solution described in Embodiment 1 of this application, an access network device may adjust an I-RNTI rule of a neighboring station. For example, when finding that an anchor access network device cannot be properly determined according to the I-RNTI rule of the neighboring station, the access network device may assist the neighboring station in modifying the I-RNTI rule, so that accuracy of determining the anchor access network device by the target access network device can be improved. On one hand, this can avoid to some extent that an access network device is omitted when the anchor access network device is determined based on an I-RNTI, in this way, a success rate of resuming an RRC connection by a terminal device can be improved, and on the other hand, this can avoid to some extent that an excessive quantity of access network devices are determined based on the I-RNTI, thereby reducing signaling overheads.

Embodiment 2:

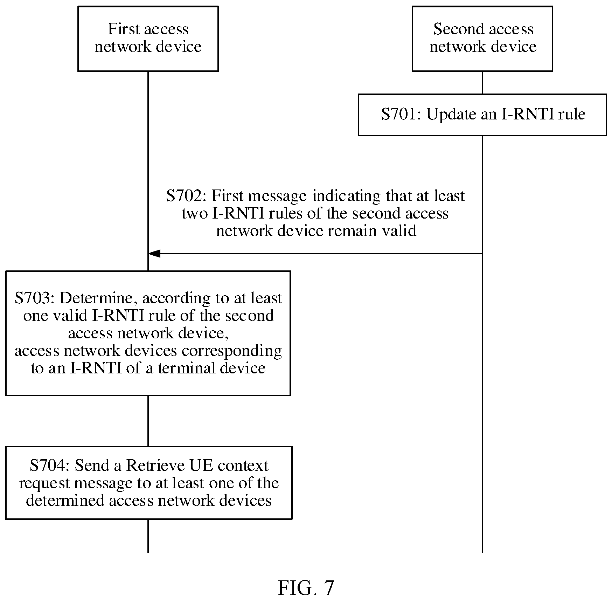

FIG. 7 shows another communication method according to an embodiment of this application. The method may include the following detailed steps:

S701: A second access network device updates an I-RNTI rule.

For example, the I-RNTI rule may be updated because a quantity of access network devices determined according to an original I-RNTI rule exceeds a threshold, or may be updated to configure a terminal device in an inactive state more properly. Certainly, the I-RNTI rule may be updated for another reason. This is not specifically limited herein.

Optionally, the second access network device may send the reason for updating the I-RNTI rule to a first access network device, or may not send the reason. This is not specifically limited herein. For example, the second access network device may add, to a first message, a reason for updating the I-RNTI rule.

It should be noted that step S701 may be an optional step.

S702: The second access network device sends a first message to the first access network device, where the first message indicates that at least two I-RNTI rules of the second access network device remain valid.

Correspondingly, the first access network device receives the first message from the second access network device.

For example, the at least two I-RNTI rules may include an updated first I-RNTI rule of the second access network device and a second I-RNTI rule that is before update and that is of the second access network device. For example, the first message may indicate that an updated I-RNTI rule of the second access network device is the first I-RNTI rule, and indicate that the second I-RNTI rule remains valid. Specifically, the first I-RNTI rule may include at least one I-RNTI rule. The second I-RNTI rule may also include at least one I-RNTI rule.

In a possible example, the first message may carry the first I-RNTI rule and first indication information, and the first indication information indicates whether the second I-RNTI rule remains valid. In the foregoing manner, the indication information may explicitly indicate whether the second I-RNTI rule remains valid. It may be understood that, if the second I-RNTI rule includes at least two I-RNTI rules, the first message may include at least one piece of first indication information, where one piece of first indication information may be associated with one or more I-RNTI rules in the second I-RNTI rule. For example, the first message may carry first indication information corresponding to each I-RNTI rule. In an implementation, the first indication information may be at least one bit, and bits in the at least one bit separately correspond to the I-RNTI rules in the second I-RNTI rule.

Optionally, the first indication information corresponds to a quantity of bits of an I-RNTI or a length type of the I-RNTI. The first message may indicate the length type of the I-RNTI and the corresponding first indication information.

In a possible example, the second I-RNTI rule including two I-RNTI rules is used as an example. The first message indicates the following information:

| First message | |
|---|---|
| > First indication information corresponding to a full I-RNTI | For example, when a length of the I-RNTI is 40 bits, the first indication information is 01 |
| > First indication information corresponding to a short I-RNTI | For example, when a length of the I-RNTI is 24 bits, the first indication information is 10 |

It is assumed that, when the first indication information is 01, it indicates that a 1st I-RNTI rule is valid, and a 2nd I-RNTI rule is invalid. When the first indication information is 10, it indicates that a 1st I-RNTI rule is invalid, and a 2nd I-RNTI rule is valid. It can be learned from the first message in the foregoing format that first indication information corresponding to the full I-RNTI (that is, the length of the I-RNTI is 40 bits) is 01. After receiving the first message, the first access network device may keep a 1st full I-RNTI rule in the second I-RNTI rule valid and a 2nd full I-RNTI rule in the second I-RNTI rule invalid. When the first indication information corresponding to the short I-RNTI (that is, the length of the I-RNTI is 24 bits) is 10, after receiving the first message, the first access network device may keep a 1st short I-RNTI rule in the second I-RNTI rule invalid and a 2nd short I-RNTI rule in the second I-RNTI rule valid.

It should be understood that the foregoing example is merely an example for description. A correspondence between the first indication information and the quantity of bits of the I-RNTI, or the length type of the I-RNTI, and/or a quantity of I-RNTI rules may alternatively be another correspondence, which is not enumerated herein.

In another possible example, the first message may carry the first I-RNTI rule and the second I-RNTI rule. In the foregoing manner, both the first I-RNTI rule and the second I-RNTI rule are carried in the first message, so that it can be implicitly indicated that the second I-RNTI rule remains valid.

In still another possible example, the first message may indicate the first access network device to add the first I-RNTI rule. In the foregoing manner, the first message indicates to add the first I-RNTI rule, so that it can be implicitly indicated that the second I-RNTI rule remains valid. For example, the first message may indicate the following information:

| First message | |
|---|---|
| > Add (add) | |
| >> First I-RNT rule | |

In a possible implementation, before step S701, the second access network device sends the second I-RNTI rule to the first access network device.

Optionally, after step S702, the first access network device may also determine that some of the at least two I-RNTI rules are invalid.

For example, it may be that the first access network device determines that the second I-RNTI rule is invalid. For example, the first access network device determines that the second I-RNTI rule is invalid when a timer corresponding to the second I-RNTI rule expires, and the timer may record an effective time of the second I-RNTI rule. Optionally, the first message may further carry time information that indicates an effective time of the second I-RNTI rule.

Alternatively, the second access network device may indicate that the second I-RNTI rule is invalid. For example, when the second access network device releases context information of all terminal devices to which I-RNTIs are allocated according to the second I-RNTI rule, the second access network device may indicate to the first access network device that the second I-RNTI rule is invalid. For example, an implementation in which the second access network device releases the context information of all the terminal devices to which the I-RNTIs are allocated according to the second I-RNTI rule may be as follows: The second access network device removes the context information of the terminal device to which the I-RNTI is allocated according to the second I-RNTI rule, and/or transfers the context information of the terminal device according to the second I-RNTI rule to another access network device.

For example, the at least two I-RNTI rules may include the updated first I-RNTI rule of the second access network device and the second I-RNTI rule that is before update and that is of the second access network device. The first access network device may receive a second message from the second access network device, where the second message indicates that the second I-RNTI rule is invalid, or the second message indicates that the first I-RNTI rule remains valid.

For example, the second message carries second indication information, and the second indication information indicates that the second I-RNTI rule is invalid. In this manner, the indication information explicitly indicates that the second I-RNTI rule is invalid.

Alternatively, the second message carries the first I-RNTI rule. In this manner, when the second message does not indicate that the second I-RNTI rule is valid, it is implicitly indicated that the second I-RNTI rule is invalid.

Alternatively, the second message carries the first I-RNTI rule and the second indication information.

Alternatively, the second message carries the second I-RNTI rule, and indicates that the second I-RNTI rule is invalid or indicates the first access network device to release the second I-RNTI rule.

It may be understood that in this embodiment of this application, an example in which the second message indicates that the second I-RNTI rule is invalid is used for description. Optionally, the second message may also indicate a new third I-RNTI rule. For details, refer to related descriptions of indicating the first I-RNTI rule in the first message. Details are not described herein again. In a possible example, the second message indicates the following information:

| First message | |
|---|---|
| > Add (add) | Optional |
| >> Third I-RNT rule | |
| Release/Remove (release/remove) | Optional |
| >> Second I-RNTI rule | |

Optionally, the second indication information corresponds to a quantity of bits of an I-RNTI or a length type of the I-RNTI. The second message may indicate the length type of the I-RNTI and the corresponding second indication information.

In a possible example, the second message indicates the following information:

| Second message | |
|---|---|
| > Second indication information corresponding to a full I-RNTI | When an I-RNTI length is 40 bits |

If the I-RNTI length of the I-RNTI rule before update is 40 bits, after receiving the second message, the first access network device may no longer maintain the second I-RNTI rule corresponding to the full I-RNTI. The second message does not indicate second indication information obtained when an I-RNTI is a short I-RNTI. Therefore, after receiving the second message, the first access network device continues to maintain the second I-RNTI rule corresponding to the short I-RNTI.

It should be understood that the foregoing example is merely an example for description. A correspondence between the second indication information and the quantity of bits of the I-RNTI or the length type of the I-RNTI may alternatively be another correspondence, which is not enumerated herein.

Alternatively, the first access network device may determine, when a timer corresponding to the second I-RNTI rule expires, that the second I-RNTI rule is invalid.

It should be noted that step S702 may be an optional step.

In a possible embodiment, that the first access network device maintains the plurality of I-RNTI rules of the second access network device valid may not depend on step S701 and/or S702. In this embodiment, the second access network device may alternatively indicate, by using the second message, that some or all of the plurality of I-RNTI rules are invalid.

Optionally, in S703, the first access network device determines, according to at least one valid I-RNTI rule of the second access network device, access network devices corresponding to an I-RNTI of a terminal device.

In an example description, the at least one valid I-RNTI rule of the second access network device may include one or more of the at least two valid I-RNTI rules indicated by the first message, and may further include a new valid I-RNTI rule indicated by the second access network device after step S702. For example, after S702, if the first access network device determines that the second I-RNTI rule is valid, the first access network device may determine, according to the first I-RNTI rule and/or the second I-RNTI rule, the access network devices corresponding to the I-RNTI of the terminal device.

Alternatively, the at least one valid I-RNTI rule of the second access network device may not include the at least two valid I-RNTI rules indicated by the first message. For example, after S702, the first access network device determines that the at least two valid I-RNTI rules indicated by the first message are invalid, and the at least one valid I-RNTI rule used when the first access network device performs S703 may not include the at least two valid I-RNTI rules indicated by the first message.

Alternatively, the at least one valid I-RNTI rule of the second access network device may not depend on the first message. For example, the first access network device maintains, in a manner independent of S701 and/or S702, that a plurality of I-RNTI rules of the second access network device are valid. The at least one valid I-RNTI rule in step S703 may include one or more I-RNTI rules in the plurality of I-RNTI rules maintained by the first access network device.

Optionally, in S704, the first access network device sends a request message for obtaining context of the terminal device to at least one of the determined access network devices.

For a specific description of S704, refer to descriptions in step S302.

In an implementation 1, the first access network device determines the access network devices according to a valid I-RNTI rule. If a quantity of the determined access network devices is greater than or equal to 2, the first access network device may send a request message for obtaining context of the terminal device to all access network devices, or sequentially send, through a traversal mechanism, the request message for obtaining the context information of the terminal device to the determined access network devices. If the first access network device uses a traversal mechanism, the first access network device may sequentially send the request message for obtaining context of the terminal device to each access network device, until the access network device corresponding to the I-RNTI is successfully found. For example, the first access network device sends the request message for obtaining context of the terminal device to the first access network device, and if the access network device corresponding to the I-RNTI is not successfully found, continues to send the request message for obtaining context of the terminal device to a next access network device. The rest may be deduced by analogy until the access network device corresponding to the I-RNTI is successfully found. It should be noted that, in this example, the first access network device sends the request message for obtaining the context information of the terminal device to the 1st access network device. However, in this embodiment of this application, "1st" is not limited to one. In other words, the first access network device may alternatively obtain the context information of the terminal device from a plurality of access network devices at a same moment.

In an implementation 2, the first access network device may sequentially determine the access network devices according to a valid I-RNTI rule. If the first access network device fails to find, according to an $n^{th}$ I-RNTI rule, the access network device corresponding to the I-RNTI, the first access network device determines the corresponding access network device according to an (n+1)th I-RNTI rule. The rest may be deduced by analogy until the access network device corresponding to the I-RNTI is successfully found. If a quantity of access network devices determined by the first access network device according to each I-RNTI rule is greater than or equal to 2, for each I-RNTI rule, the first access network device may obtain the context information of the terminal device in the manner of obtaining the context information of the terminal device in the implementation 1. Certainly, another manner may be used. This is not specifically limited herein. Herein, n is an integer greater than or equal to 1.

For example, two valid I-RNTI rules of the second access network device are used as an example. For example, after S702, if the first access network device maintains the first I-RNTI rule, and continues to maintain that the second I-RNTI rule is valid, the first access network device may determine, according to the first I-RNTI rule and/or the second I-RNTI rule, the access network device corresponding to the I-RNTI of the terminal device. According to the implementation 1, the first access network device first determines corresponding access network devices according to the first I-RNTI rule and the second I-RNTI rule. If a quantity of the determined access network devices is greater than or equal to 2, the first access network device may separately perform S704 with all determined access network devices, or may perform S704 with some corresponding access network devices. If the first access network device and some corresponding access network devices perform S704, when the first access network device successfully finds the access network device corresponding to the I-RNTI, the first access network device may terminate the traversal. According to the implementation 2, the first access network device may determine, according to the 1st I-RNTI rule (which may be the first I-RNTI rule or the second I-RNTI rule), the access network device corresponding to the I-RNTI of the terminal device, and then send the request message for obtaining context of the terminal device to the access network device determined according to the 1st I-RNTI rule. If a quantity of the determined access network devices is greater than or equal to 2, the first access network device may separately perform S704 with all determined access network devices, or may perform S704 with some corresponding access network devices. If the first access network device fails to find, by traversing the access network devices determined according to the 1st I-RNTI rule, the access network device corresponding to the I-RNTI, the first access network device may continue to determine, according to a 2nd I-RNTI rule, the access network device corresponding to the I-RNTI of the terminal device. If a quantity of access network devices determined according to the 2nd I-RNTI rule is greater than or equal to 2, for an implementation of the first access network device, refer to the foregoing description. Details are not described herein again.

In an example description, if local access network device identification information of a plurality of access network devices is the same as the local access network device identification information carried in the I-RNTI of the terminal device, the first access network device may determine the plurality of access network devices based on the I-RNTI of the terminal device.

It should be noted that, in the foregoing another implementation, the first access network device obtains the context information of the terminal device according to one I-RNTI rule at a time in the traversal process. However, this embodiment of this application is not limited to one I-RNTI rule. The first access network device may also obtain the context information of the terminal device based on a plurality of I-RNTI rules at a time in the traversal process.

In this embodiment of this application, the target access network device may keep a plurality of I-RNTI rules of the source access network device valid under an instruction of the source access network device, so that the source access network device can be determined according to the plurality of I-RNTI rules when resuming the RRC connection of the terminal device. This can avoid to some extent that an access network device is omitted when the source access network device is determined based on the I-RNTI, thereby improving a success rate of resuming an RRC connection by the terminal device, so that the terminal device can enter the connected state fast, thereby shortening a service transmission delay.

For example, the first message indicates to add an I-RNTI rule, so that the first access network device further maintains the added I-RNTI rule based on the basis of maintaining the original I-RNTI rule of the second access network device. Because the second access network device updates the I-RNTI rule, there may be a terminal device to which an I-RNTI is allocated according to the original I-RNTI rule. In the foregoing manner, the first access network device may determine an access network device according to the original I-RNTI rule and the newly added I-RNTI rule when the RRC connection of the terminal device is resumed. This can avoid to some extent that an access network device is omitted, thereby improving a success rate of resuming an RRC connection by the terminal device.

In addition, the second message indicates to remove/release an I-RNTI rule, so that the first access network device may no longer maintain the original I-RNTI rule of the second access network device. In the foregoing manner, the first access network device may determine the access network device according to the newly added I-RNTI rule when resuming the RRC connection of the terminal device, so that a quantity of determined access network devices can be reduced, and context information of the terminal device can be obtained from a small quantity of access network devices. It can be learned that costs of the first access network device can be reduced in the foregoing manner.

In a possible implementation, before indicating any I-RNTI rule to the first access network device, the second access network device may interact with the first access network device based on the process in Embodiment 1, so that the I-RNTI rule of the second access network device does not conflict with an I-RNTI rule of another access network device. For a specific process, refer to descriptions in Embodiment 1. Details are not described herein again.

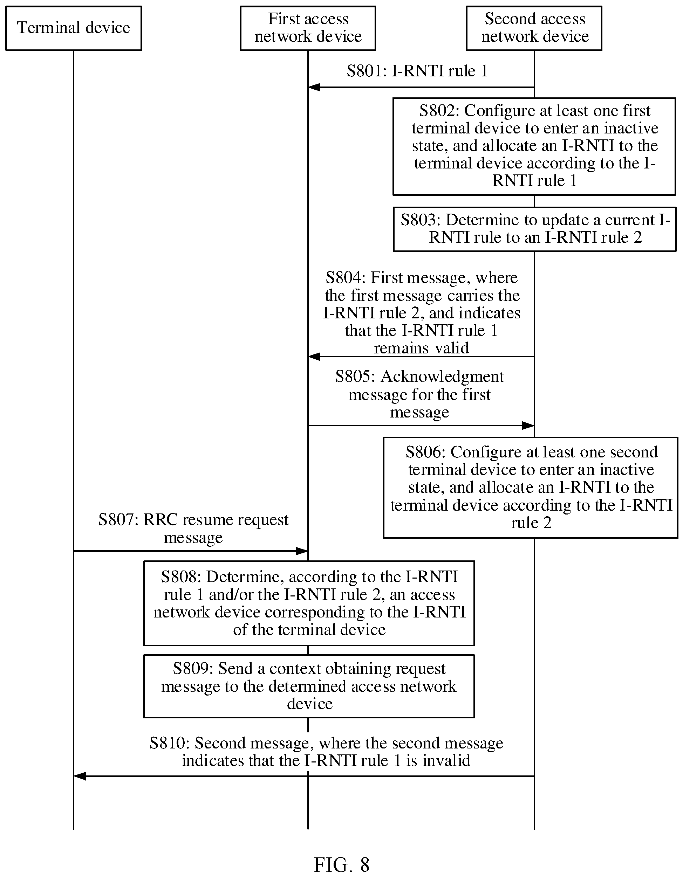

For ease of understanding of the solution, the following describes the method provided in Embodiment 2 of this application with reference to a specific scenario. In a procedure shown in FIG. 8, a first access network device may be a target access network device to which a terminal device initiates an RRC resume procedure, and a second access network device may be a source access network device that stores context information of the terminal device.

The procedure shown in FIG. 8 may include the following steps.

S801: The second access network device sends an I-RNTI rule 1 to the first access network device.

Optionally, before step S801, the second access network device may interact with the first access network device based on the process in Embodiment 1, so that the I-RNTI rule 1 does not conflict with an I-RNTI rule of another access network device.

S802: The second access network device configures at least one first terminal device to enter an inactive state, and allocates an I-RNTI to the terminal device according to the I-RNTI rule 1.

It should be noted that there is no strict sequence between steps S801 and S802. S801 may be performed before S802, or S802 may be performed before S801, or S801 and S802 may be performed simultaneously.

S803: The second access network device determines to update a current I-RNTI rule to an I-RNTI rule 2.

Optionally, before step S803, the second access network device may interact with the first access network device based on the process in Embodiment 2, so that the I-RNTI rule 2 does not conflict with an I-RNTI rule of another access network device.

For example, a reason for updating the I-RNTI rule may be that a quantity of access network devices determined according to the I-RNTI rule 1 exceeds a threshold, or may be to configure a terminal device in an inactive state more properly. Certainly, another update reason may be used. This is not specifically limited herein.

Optionally, the second access network device may send the reason for updating the I-RNTI rule to a first access network device, or may not send the reason. This is not specifically limited herein. For example, the second access network device may add, to a first message, a reason for updating the I-RNTI rule.

S804: The second access network device sends a first message to the first access network device, where the first message carries the I-RNTI rule 2, and indicates that the I-RNTI rule 1 remains valid.

In an example, the first message may carry the I-RNTI rule 2 and first indication information, and the first indication information indicates that the I-RNTI rule 1 remains valid, or the first indication information may indicate that the first access network device may determine an access network device according to the I-RNTI rule before update 1.

In another example, the first message may carry the I-RNTI rule 1 and the I-RNTI rule 2.

In still another example, the first message may indicate the first access network device to add the I-RNTI rule 2.

In an example description, the first message may be a device configuration update message, for example, an ENB/NG-RAN NODE CONFIGURATION UPDATE message, or a device configuration update acknowledgment message, for example, ENB/NG-RAN NODE CONFIGURATION UPDATE ACKNOWLEDGE.

Optionally, after S804, S805 may be performed.

S805: The first access network device sends an acknowledgment message for the first message to the second access network device.

For example, the acknowledgment message for the first message may be a device configuration update acknowledgment message, for example, ENB/NG-RAN NODE CONFIGURATION UPDATE ACKNOWLEDGE.

S806: The second access network device configures at least one second terminal device to enter an inactive state, and allocates an I-RNTI to the terminal device according to the I-RNTI rule 2.

S807: A terminal device 1 sends an RRC resume request message to the first access network device, where the RRC resume request message carries an I-RNTI of the terminal device 1.

The terminal device 1 may be a first terminal device, or may be a second terminal device.

S808: The first access network device determines, according to the I-RNTI rule 1 and/or the I-RNTI rule 2, an access network device corresponding to the I-RNTI of the terminal device 1.

S809: The first access network device sends a context obtaining request message to the determined access network device, where the context obtaining request message is used to obtain context information of the terminal device 1.

In an implementation, the first access network device determines, according to the I-RNTI rule 1 and the I-RNTI rule 2, an access network device corresponding to the I-RNTI of the terminal device 1, and separately sends the context obtaining request message to the access network device determined according to the I-RNTI rule 1 and the access network device determined according to the I-RNTI rule 2.

In another implementation, the first access network device determines, according to the I-RNTI rule 1, the access network device corresponding to the I-RNTI of the terminal device, and sends the context obtaining request message to the access network device determined according to the I-RNTI rule 1. If the access network device corresponding to the I-RNTI is successfully found, the RRC resume procedure continues. For details, refer to S303 in FIG. 3. If the access network device corresponding to the I-RNTI is not successfully found, the access network device corresponding to the I-RNTI of the terminal device is determined according to the I-RNTI rule 2, and the context obtaining request message is sent to the access network device determined according to the I-RNTI rule 2.

It should be understood that, in the foregoing implementation, that the context information of the terminal device is first obtained according to the I-RNTI rule 1, and then the context information of the terminal device is obtained according to the I-RNTI rule 2 is only an example. In specific implementation, the context information of the terminal device may be first obtained according to the I-RNTI rule 2, and then the context information of the terminal device is obtained according to the I-RNTI rule 1. A sequence of the I-RNTI rules is not specifically limited herein.

S810: The second access network device sends a second message to the first access network device, where the second message indicates that the I-RNTI rule 1 is invalid.

For example, the second message carries second indication information, and the second indication information indicates that the I-RNTI rule 1 is invalid. Alternatively, the second message carries only the I-RNTI rule 2. Alternatively, the second message carries the second indication information and the I-RNTI rule 2. Alternatively, the second message carries the I-RNTI rule 1, and indicates that the I-RNTI rule 1 is invalid or indicates the first access network device to release the I-RNTI rule 1.

In an example description, the second message may be a device configuration update message, for example, an ENB/NG-RAN NODE CONFIGURATION UPDATE message, or a device configuration update acknowledgment message, for example, ENB/NG-RAN NODE CONFIGURATION UPDATE ACKNOWLEDGE.

In an implementation, the second access network device may send the second message to the first access network device when releasing context information of all terminal devices to which I-RNTIs are allocated according to the I-RNTI rule 1.

After step S810, if a terminal device 2 initiates an RRC resume procedure to the first access network device, the first access network device may determine an access network device according to the I-RNTI rule 2.

It should be noted that not all the steps in FIG. 8 may be performed, for example, some of the steps are performed. In addition, steps that are not shown (or described) in FIG. 8 may be further performed.

It should be understood that, in Embodiment 2 of this application, only a process in which the second access network device updates an I-RNTI rule for the first access network device is described. The first access network device may alternatively update an I-RNTI rule for the second access network device. Details are not repeated.

Embodiment 3:

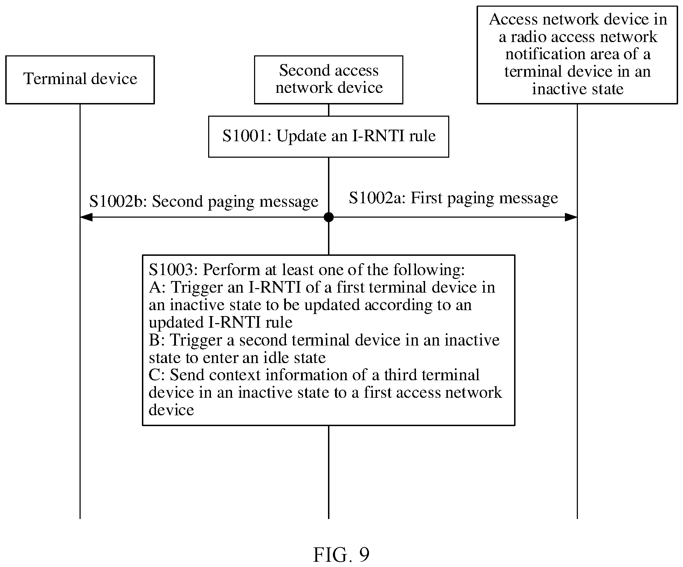

FIG. 9 shows another communication method according to an embodiment of this application. The method may include the following detailed steps:

S1001: A second access network device updates an I-RNTI rule.

For example, for step S 1001, refer to related descriptions of step S701. Details are not described herein again.

After step S1001, S1002a or S1002b may be performed, or S1002a and S1002b may be performed.

S1002a: The second access network device sends a first paging message, where the first paging message indicates an access network device in a radio access network notification area of a terminal device in an inactive state to page the terminal device in the inactive state. Correspondingly, the access network device in the radio access network notification area of the terminal device in the inactive state receives the first paging message.

A first access network device in the radio access network notification area of the terminal device in the inactive state is used as an example. After receiving the first paging message, the first access network device may send a third paging message, where the third paging message is used to page the terminal device in the inactive state.

Optionally, the first paging message may carry a paging cause, and the paging cause indicates an I-RNTI rule change. Optionally, the third paging message may carry a paging cause, and the paging cause indicates an I-RNTI rule change.

S1002b: The second access network device sends a second paging message, where the second paging message is used by the second access network device to page the terminal device in the inactive state. Correspondingly, the terminal device receives the second paging message.

The second paging message may carry a paging cause, and the paging cause indicates an I-RNTI rule change.

After S 1002a or S1002b, S 1003 may be performed.

S1003: The second access network device performs at least one of the following A to C:

A: Trigger an I-RNTI of a first terminal device in an inactive state to be updated according to an updated I-RNTI rule.

In an implementation, the first terminal device sends a paging response to the second access network device, and the second access network device may allocate the I-RNTI to the first terminal device according to the updated I-RNTI rule.

In another implementation, the second access network device may send a third message to a third access network device, and the third access network device forwards the third message to the first terminal device. The third message is used to allocate the I-RNTI to the first terminal device according to the updated I-RNTI rule, where the third access network device is an access network device that receives a paging response sent by the first terminal device.

Optionally, the third message may carry a cause value that indicates an I-RNTI rule change.

B: Trigger a second terminal device in an inactive state to enter an idle state.

In an implementation, the second terminal device sends a paging response to the second access network device, and the second access network device releases the second terminal device to the idle state.

In another implementation, the second terminal device sends a paging response to a fourth access network device, the second access network device may send a fourth message to the fourth access network device, and the fourth access network device forwards the fourth message to the first terminal device, where the fourth message is used to release the second terminal device to the idle state.

Optionally, the fourth message may carry a cause value that indicates an I-RNTI rule change.

C: Send context information of a third terminal device in an inactive state to a first access network device, where the first access network device is an access network device that receives a paging response sent by the third terminal device.

The second access network device may store context information of the first terminal device, the second terminal device, and the third terminal device.

According to the solution in Embodiment 3 of this application, when updating an I-RNTI rule, a source access network device pages a terminal device in time, so that an I-RNTI of the terminal device can be updated according to a new I-RNTI rule, or the terminal device can be released to an idle state, or context information of the terminal device to which the I-RNTI is allocated according to an old I-RNTI rule is transferred to another access network device, so that the source access network device and the target access network device can maintain a set of I-RNTI rules, thereby reducing complexity of implementation of the access network device.

Embodiment 4:

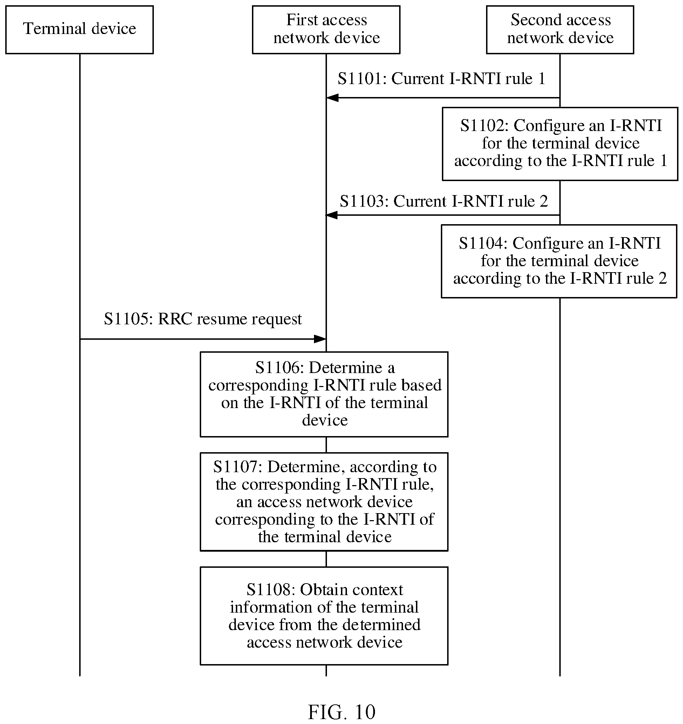

In Embodiment 4 of this application, one or more bits are obtained from an I-RNTI through division, to indicate a corresponding I-RNTI rule. FIG. 10 shows another communication method according to an embodiment of this application. The method may include the following detailed steps:

S1101: A second access network device sends a current I-RNTI rule 1 to a first access network device.

S1102: The second access network device configures an I-RNTI for a terminal device 1 according to the I-RNTI rule 1.

The corresponding I-RNTI rule 1 is indicated for one or more bits in the I-RNTI configured for the terminal device 1.

In an embodiment, after step S1102, the second access network device may send configuration information to the terminal device 1, where the configuration information carries the I-RNTI of the terminal device 1.

In an implementation, the I-RNTI of the terminal device 1 may carry specific content of the I-RNTI rule 1, or may carry an identifier, index information, and the like of the I-RNTI rule 1.

It should be noted that step S1101 may be an optional step. For example, when the I-RNTI carries the specific content of the I-RNTI rule 1, S1101 may not be performed.

S1103: The second access network device updates a current I-RNTI rule to an I-RNTI rule 2 for the first access network device.

S1104: The second access network device configures an I-RNTI for a terminal device 2 according to the I-RNTI rule 2.

The corresponding I-RNTI rule 2 is indicated for one or more bits in the I-RNTI of the terminal device 2.

In an embodiment, after step S1104, the second access network device may send configuration information to the terminal device 2, where the configuration information carries the I-RNTI of the terminal device 2.

In an implementation, the I-RNTI of the terminal device 2 may carry specific content of the I-RNTI rule 2, or may carry an identifier, index information, and the like of the I-RNTI rule 2.

It should be noted that step S1102 may be an optional step. For example, when the I-RNTI carries the specific content of the I-RNTI rule 2, S1102 may not be performed.

S1105: A terminal device sends an RRC resume request to the first access network device, where the RRC resume request carries an I-RNTI of the terminal device.

The terminal device may be the terminal device 1, or may be the terminal device 2.

S1106: The first access network device determines a corresponding I-RNTI rule based on the I-RNTI of the terminal device.

For example, if the terminal device that sends the RRC resume request is the terminal device 1, the first access network device determines, based on the I-RNTI of the terminal device, that the corresponding I-RNTI rule is the I-RNTI rule 1.

If the terminal device that sends the RRC resume request is the terminal device 2, the first access network device determines, based on the I-RNTI of the terminal device, that the corresponding I-RNTI rule is the I-RNTI rule 2.

S1107: The first access network device determines, according to the corresponding I-RNTI rule, an access network device corresponding to the I-RNTI of the terminal device.

S1108: The first access network device obtains context information of the terminal device from the determined access network device.

It should be understood that Embodiment 4 of this application describes only a process in which the second access network device sends the I-RNTI rule to the first access network device, the second access network device allocates the I-RNTI to the terminal device, and the terminal device initiates an RRC resume procedure to the first access network device. The first access network device may also send an I-RNTI rule to the second access network device, the first access network device may also allocate an I-RNTI to the terminal device, and the terminal device may also initiate an RRC resume procedure to the second access network device. Details are not repeated.

In this embodiment of this application, the I-RNTI of the terminal device indicates the corresponding I-RNTI rule, so that the first access network device can determine, according to the indicated I-RNTI rule, access network device information carried in the I-RNTI, thereby improving accuracy of resuming the RRC connection by the terminal device.

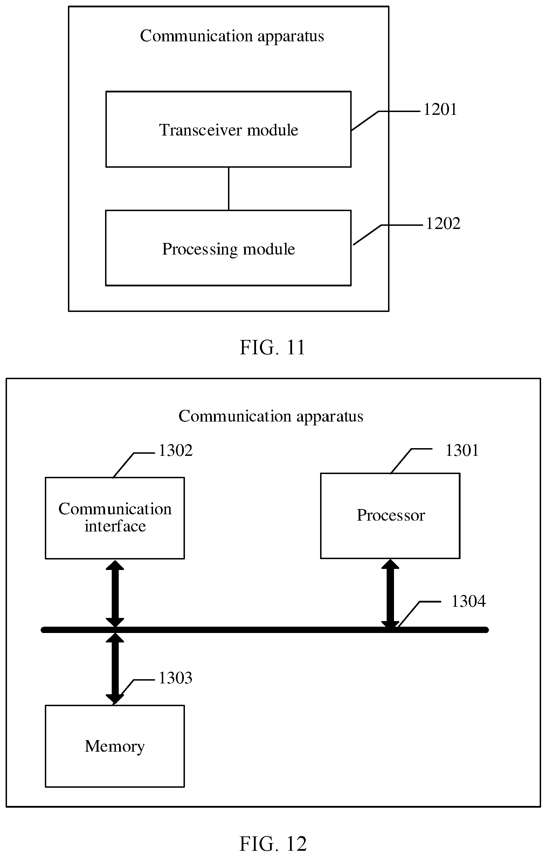

Based on a same inventive concept as the method embodiments, an embodiment of this application provides a communication apparatus. A structure of the communication apparatus may be shown in FIG. 11, and includes a transceiver module 1201 and a processing module 1202. Optionally, the apparatus may further include a storage module, and the storage module may be configured to store program instructions and/or data. In a possible implementation, the processing module 1202 may invoke program instructions stored in the storage module to perform processing actions such as determining, obtaining, and updating.

In a specific implementation, the communication apparatus may be specifically configured to implement the method performed by the first access network device in the embodiment in FIG. 7 or FIG. 8. The apparatus may be the first access network device, or may be a chip or a chip group in the first access network device, or a part of a chip that is configured to perform a related method function. The transceiver module 1201 is configured to receive a first message from a second access network device, where the first message indicates that at least two I-RNTI rules of the second access network device remain valid; and the processing module 1202 is configured to: determine, according to at least one valid I-RNTI rule of the second access network device, an access network device corresponding to an I-RNTI of a terminal device; and obtain context information of the terminal device from at least one of the determined access network devices.

For example, the first message indicates that an updated I-RNTI rule of the second access network device is a first I-RNTI rule, and indicates that a second I-RNTI rule remains valid, where the second I-RNTI rule is an I-RNTI rule before update by the second access network device.

For example, the first message carries the first I-RNTI rule and first indication information, and the first indication information indicates whether the second I-RNTI rule remains valid; or the first message carries the first I-RNTI rule and the second I-RNTI rule.

Optionally, the transceiver module 1201 is further configured to receive a second message from the second access network device, where the second message indicates that the second I-RNTI rule is invalid.

For example, the second message carries second indication information, and the second indication information indicates that the second I-RNTI rule is invalid; or the second message indicates that the first I-RNTI rule remains valid.

In another specific implementation, the communication apparatus may be specifically configured to implement the method performed by the second access network device in the embodiment in FIG. 7 or FIG. 8. The apparatus may be the second access network device, or may be a chip or a chip group in the second access network device, or a part of a chip that is configured to perform a related method function. The processing module 1202 is configured to update an I-RNTI rule. The transceiver module 1201 is configured to send a first message to a first access network device, where the first message indicates that at least two I-RNTI rules of a second access network device remain valid.

For example, the first message indicates that an updated I-RNTI rule of the second access network device is a first I-RNTI rule, and indicates that a second I-RNTI rule remains valid, where the second I-RNTI rule is an I-RNTI rule before update by the second access network device.

For example, the first message carries the first I-RNTI rule and first indication information, and the first indication information indicates whether the second I-RNTI rule remains valid; or the first message carries the first I-RNTI rule and the second I-RNTI rule.

Optionally, the transceiver module 1201 is further configured to send a second message to the first access network device, where the second message indicates that the second I-RNTI rule is invalid.

For example, the second message carries second indication information, and the second indication information indicates that the second I-RNTI rule is invalid; or the second message indicates that the first I-RNTI rule remains valid.

In a specific implementation, the communication apparatus may be specifically configured to implement the method performed by the first access network device in the embodiment in FIG. 10. The apparatus may be the first access network device, or may be a chip or a chip group in the first access network device, or a part of a chip that is configured to perform a related method function. The processing module 1202 is configured to update an I-RNTI rule. The transceiver module 1201 is configured to send a first paging message and/or a second paging message, where the first paging message indicates an access network device in a radio access network notification area of a terminal device in an inactive state to page the terminal device in the inactive state, and the second paging message is used by a second access network device to page the terminal device in the inactive state. The transceiver module 1201 is further configured to perform at least one of the following: triggering an I-RNTI of a first terminal device in an inactive state to be updated according to an updated I-RNTI rule; triggering a second terminal device in an inactive state to enter an idle state; and sending context information of a third terminal device in an inactive state to the first access network device through the transceiver module 1201, where the first access network device is an access network device that receives a paging response sent by the third terminal device.

For example, the first paging message and/or the second paging message carry/carries a paging cause, and the paging cause is an I-RNTI rule change.

Optionally, when triggering the I-RNTI of the first terminal device in the inactive state to be updated, the processing module 1202 is specifically configured to: allocate an I-RNTI to the first terminal device according to the updated I-RNTI rule; or send a third message to a third access network device through the transceiver module 1201, where the third access network device is an access network device that receives a paging response sent by the first terminal device, and the third message indicates the third access network device to allocate an I-RNTI to the first terminal device.

For example, the third message carries a cause value that indicates an I-RNTI rule change.

Optionally, when triggering the second terminal device in the inactive state to enter the idle state, the transceiver module 1201 is specifically configured to: release the second terminal device to the idle state; or send a fourth message to a fourth access network device through the transceiver module 1201, where the fourth access network device is an access network device that receives a paging response sent by the second terminal device, and the fourth message indicates the fourth access network device to release the second terminal device to the idle state.

For example, the fourth message carries a cause value that indicates an I-RNTI rule change.

In a specific implementation, the communication apparatus may be specifically configured to implement the method performed by the second access network device in the embodiment shown in FIG. 10. The apparatus may be the second access network device, or may be a chip or a chip group in the second access network device, or a part of a chip that is configured to perform a related method function. The transceiver module 1201 is configured to: receive a first paging message from the second access network device, where the first paging message is used to page a terminal device in an inactive state; and send a third paging message, where the third paging message is used to page the terminal device in the inactive state; and the processing module 1202 is configured to perform at least one of the following: updating an I-RNTI of a first terminal device in an inactive state; and releasing a second terminal device in an inactive state to enter an idle state.

For example, the first paging message and/or the third paging message carry/carries a paging cause, and the paging cause is an I-RNTI rule change.

Optionally, the transceiver module 1201 is further configured to: before the processing module 1202 updates the I-RNTI of the terminal device in the inactive state, receive a third message from the second access network device, where the third message indicates the first access network device to allocate an I-RNTI to the first terminal device; or before the processing module 1202 releases the terminal device in the inactive state to enter the idle state, receive a fourth message from the second access network device, where the fourth message indicates the fourth access network device to release the second terminal device to the idle state.

For example, the third message and/or the fourth message carry/carries a cause value that indicates an I-RNTI rule change.

In a specific implementation, the communication apparatus may be specifically configured to implement the method performed by the terminal device in the embodiment in FIG. 10. The apparatus may be the second access network device, or may be a chip or a chip group in the second access network device, or a part of a chip that is configured to perform a related method function. The transceiver module 1201 is configured to receive a second paging message or a third paging message. The processing module 1202 is configured to enter an idle state or update an I-RNTI.

In a specific implementation, the communication apparatus may be specifically configured to implement the method performed by the first access network device in the embodiment in FIG. 4 to FIG. 6. The apparatus may be the first access network device, or may be a chip or a chip group in the first access network device, or a part of a chip that is configured to perform a related method function. The transceiver module 1201 is configured to receive a message 1 from a second access network device, where the message 1 indicates a first I-RNTI rule of the second access network device; and the processing module 1202 is configured to: determine, by the first access network device, that the first I-RNTI rule conflicts with an I-RNTI rule of another access network device; and trigger the second access network device to update the I-RNTI rule.

Optionally, when triggering the second access network device to update the I-RNTI rule, the processing module 1202 is specifically configured to send a message 2 to the second access network device through the transceiver module, where the message 2 indicates the second access network device to update the I-RNTI rule.

For example, the message 2 carries at least one of the following information: first information and second information, where the first information indicates the second access network device to update the I-RNTI rule, and the second information indicates an update requirement of the I-RNTI rule. According to the foregoing design, update efficiency can be improved.

Optionally, when triggering the second access network device to update the I-RNTI rule, the processing module 1202 is specifically configured to send a message 3 to an OAM entity through the transceiver module, where the message 3 indicates that I-RNTI rules conflict with each other.

For example, the message 3 carries information about the first I-RNTI rule and/or identification information of the second access network device. In the foregoing manner, the OAM entity may determine the I-RNTI rules that conflict with each other.

For example, the message 3 further carries information about an I-RNTI rule of another access network device and/or identification information of the another access network device. In the foregoing manner, the OAM entity may determine the I-RNTI rules that conflict with each other.

Optionally, the transceiver module 1201 is further configured to receive third information from the second access network device, where the third information indicates that the first access network device is allowed to assist the second access network device in adjusting the I-RNTI rule.

In a specific implementation, the communication apparatus may be specifically configured to implement the method performed by the second access network device in the embodiments shown in FIG. 4 to FIG. 6. The apparatus may be the second access network device, or may be a chip or a chip group in the second access network device, or a part of a chip that is configured to perform a related method function. The transceiver module 1201 is configured to communicate with a first access network device. The processing module 1202 is configured to: send a message 1 to the first access network device through the transceiver module 1201, where the message 1 indicates a first I-RNTI rule of the second access network device; and receive a message 2 from the first access network device through the transceiver module 1201, where the message 2 indicates the second access network device to update an I-RNTI rule.

For example, the message 2 carries at least one of the following information: first information and second information, where the first information indicates the second access network device to update the I-RNTI rule, and the second information indicates an update requirement of the I-RNTI rule. According to the foregoing design, update efficiency can be improved.

Optionally, the transceiver module 1201 is further configured to send third information to the first access network device, where the third information indicates that the first access network device is allowed to assist the second access network device in adjusting the I-RNTI rule.

For example, the message 3 carries information about the first I-RNTI rule and/or identification information of the second access network device. In the foregoing manner, the OAM entity may determine the I-RNTI rules that conflict with each other.

For example, the message 3 further carries information about an I-RNTI rule of another access network device and/or identification information of the another access network device. In the foregoing manner, the OAM entity may determine the I-RNTI rules that conflict with each other.

Optionally, the transceiver module 1201 is further configured to send third information to the first access network device, where the third information indicates that the first access network device is allowed to assist the second access network device in adjusting the I-RNTI rule.

In a specific implementation, the communication apparatus may be specifically configured to implement the method performed by the OAM entity in the embodiments shown in FIG. 4 to FIG. 6. The apparatus may be the OAM entity, or may be a chip or a chip group in the OAM entity, or a part of a chip that is configured to perform a related method function. The transceiver module 1201 is configured to receive a message 3 from a first access network device, where the message 3 indicates that inactive radio network temporary identifier I-RNTI rules conflict with each other. The processing module 1202 is configured to update the I-RNTI rules that conflict with each other.

Optionally, the processing module 1202 is specifically configured to update an I-RNTI rule of a second access network device. The transceiver module 1201 is further configured to send an updated I-RNTI rule to the second access network device.

The processing module 1202 may be further configured to update an I-RNTI rule of a third access network device. The transceiver module 1201 is further configured to send an updated I-RNTI rule to the third access network device.

In a specific implementation, the communication apparatus may be specifically configured to implement the method performed by the first access network device in the embodiment in FIG. 11. The apparatus may be the first access network device, or may be a chip or a chip group in the first access network device, or a part of a chip that is configured to perform a related method function. The transceiver module 1201 is configured to receive an RRC resume request from a terminal device, where the RRC resume request carries an I-RNTI of the terminal device, and the I-RNTI indicates a corresponding I-RNTI rule. The processing module 1202 is configured to: determine, according to an I-RNTI rule, an access network device corresponding to the I-RNTI, and obtain context information of the terminal device from the access network device.

In a specific implementation, the communication apparatus may be specifically configured to implement the method performed by the second access network device in the embodiment shown in FIG. 11. The apparatus may be the second access network device, or may be a chip or a chip group in the second access network device, or a part of a chip that is configured to perform a related method function. The processing module 1202 is configured to: determine an I-RNTI rule; and determine an I-RNTI of a terminal device according to the I-RNTI rule, where the I-RNTI indicates a corresponding I-RNTI rule.

In a specific implementation, the communication apparatus may be specifically configured to implement the method performed by the terminal device in the embodiment shown in FIG. 11. The apparatus may be the terminal device, or may be a chip or a chip group in the terminal device, or a part that is in a chip and that is configured to perform a related method function. The transceiver module 1201 is configured to: receive configuration information from a second access network device, where the configuration information carries an I-RNTI allocated by the second access network device to the terminal device, and the I-RNTI indicates a corresponding I-RNTI rule; and send an RRC resume request to a first access network device, where the RRC resume request carries the I-RNTI of the terminal device, and the I-RNTI indicates a corresponding I-RNTI rule.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to related description in the method embodiments.

In a possible manner, the communication apparatus may be shown in FIG. 12. The communication apparatus may be an access network device or a chip in an access network device. The communication apparatus may include a processor 1301 and a communication interface 1302, and optionally, may further include a memory 1303. The processing module 1202 may be a processor 1301. The transceiver module 1201 may be a communication interface 1302.

The processor 1301 may be a central processing module (central processing unit, CPU), a digital processing module, or the like. The communication interface 1302 may be a transceiver, an interface circuit like a transceiver circuit, a transceiver chip, or the like. The communication apparatus further includes a memory 1303, configured to store a program executed by the processor 1302. The memory 1303 may be a nonvolatile memory such as a hard disk drive (hard disk drive, HDD) or a solid-state drive (solid-state drive, SSD), or may be a volatile memory (volatile memory) such as a random access memory (random access memory, RAM). The memory 1303 is any other medium that can be configured to carry or store instructions and/or data and that can be accessed by a computer, but is not limited thereto.

In a possible manner, the processor 1301 may be configured to read program code and/or data stored in the memory 1303, to implement, for example, an action of the processing module 1202. Details are not described herein in this application.

A specific connection medium among the communication interface 1302, the processor 1301, and the memory 1303 is not limited in this embodiment of this application. In this embodiment of this application, the memory 1303, the processor 1301, and the communication interface 1302 are connected through a bus 1304 in FIG. 12. In FIG. 12, the bus is indicated by using a bold line. A manner of connection between other components is merely an example for description, and imposes no limitation. The bus may be classified into an address bus, a data bus, a control bus, and the like. For ease of representation, only one bold line indicates the bus in FIG. 12, but this does not mean that there is only one bus or only one type of bus.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of the present invention further provides a communication system, where the communication system includes the first access network device and the second access network device in Embodiment 1, and may further include the OAM entity in Embodiment 1.

An embodiment of the present invention further provides another communication system. The communication system includes the first access network device and the second access network device described in Embodiment 2, and may further include a terminal device.

An embodiment of the present invention further provides another communication system. The communication system includes the first access network device and the second access network device described in Embodiment 3, and may further include a terminal device.

An embodiment of the present invention further provides another communication system. The communication system includes the first access network device and the second access network device described in Embodiment 4, and may further include a terminal device.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state drive Solid State Disk (SSD)), or the like.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may alternatively be stored in a computer-readable memory that can indicate the computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more procedures in the flowcharts and/or in one or more blocks in the block diagrams.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein the method comprises:

   receiving, by a first access network device, a first message from a second access network device, wherein the first message indicates that at least two inactive radio network temporary identifier I-RNTI rules of the second access network device remain valid;
   determining, by the first access network device according to at least one valid I-RNTI rule of the second access network device, an access network device corresponding to an I-RNTI of a terminal device; and
   obtaining, by the first access network device, context information of the terminal device from at least one of the determined access network device.

2. The method according to claim 1, wherein the first message indicates that an updated I-RNTI rule of the second access network device is a first I-RNTI rule, and indicates that a second I-RNTI rule remains valid, wherein the second I-RNTI rule is an I-RNTI rule before update by the second access network device.

3. The method according to claim 2, wherein the first message carries the first I-RNTI rule and first indication information, and the first indication information indicates that the second I-RNTI rule remains valid; or

the first message carries the first I-RNTI rule and the second I-RNTI rule; or
the first message indicates to add the first I-RNTI rule.

4. The method according to claim 2 or 3, wherein the method further comprises:
receiving, by the first access network device, a second message from the second access network device, wherein the second message indicates that the second I-RNTI rule is invalid.

5. The method according to claim 4, wherein the second message carries second indication information, and the second indication information indicates that the second I-RNTI rule is invalid; or

the second message indicates that the first I-RNTI rule remains valid; or
the second message indicates to release/remove the second I-RNTI rule.

6. The method according to any one of claims 1 to 5, wherein the I-RNTI rule is used by the first access network device to determine access network device identification information carried in the I-RNTI of the terminal device.

7. The method according to claim 6, wherein the I-RNTI rule comprises: related information of the access network device identification information, wherein the related information of the access network device identification information indicates a quantity of bits of the access network device identification information, or the related information of the access network device identification information is access network device identification information of the second access network device.

8. The method according to any one of claims 1 to 7, wherein the method further comprises:

receiving, by the first access network device, a radio resource control RRC resume request from the terminal device, wherein the RRC resume request carries the I-RNTI of the terminal device, and the I-RNTI indicates the I-RNTI rule before update by the second access network device or the updated I-RNTI rule of the second access network device; and
the determining, by the first access network device according to at least one valid I-RNTI rule of the second access network device, the access network device corresponding to an I-RNTI of a terminal device comprises: determining, by the first access network device according to the I-RNTI rule indicated by the I-RNTI, the access network device corresponding to the I-RNTI of the terminal device.

9. The method according to claim 8, wherein

if a first bit of the I-RNTI is a first value, the I-RNTI indicates the I-RNTI rule before update by the second access network device, and the first bit comprises one or more bits; or
if a first bit of the I-RNTI is a second value, the I-RNTI indicates the updated I-RNTI rule of the second access network device, and the first bit comprises one or more bits.

10. A communication method, wherein the method comprises:

updating, by a second access network device, an inactive radio network temporary identifier I-RNTI rule; and
sending, by the second access network device, a first message to a first access network device, wherein the first message indicates that at least two inactive radio network temporary identifier I-RNTI rules of the second access network device remain valid.

11. The method according to claim 10, wherein the first message indicates that an updated I-RNTI rule of the second access network device is a first I-RNTI rule, and indicates that a second I-RNTI rule remains valid, wherein the second I-RNTI rule is an I-RNTI rule before update by the second access network device.

12. The method according to claim 11, wherein the first message carries the first I-RNTI rule and first indication information, and the first indication information indicates that the second I-RNTI rule remains valid; or

the first message carries the first I-RNTI rule and the second I-RNTI rule; or
the first message indicates to add the first I-RNTI rule.

13. The method according to claim 11 or 12, wherein the method further comprises:

sending, by the second access network device, a second message to the first access network device, wherein the second message indicates that the second I-RNTI rule is invalid.

14. The method according to claim 13, wherein the second message carries second indication information, and the second indication information indicates that the second I-RNTI rule is invalid; or

the second message indicates that the first I-RNTI rule remains valid; or
the second message indicates to release/remove the second I-RNTI rule.

15. The method according to any one of claims 10 to 14, wherein the I-RNTI rule is used by the first access network device to determine access network device identification information carried in an I-RNTI of a terminal device.

16. The method according to claim 15, wherein the I-RNTI rule comprises: related information of the access network device identification information, wherein the related information of the access network device identification information indicates a quantity of bits of the access network device identification information, or the related information of the access network device identification information is access network device identification information of the second access network device.

17. The method according to any one of claims 10 to 16, wherein the method further comprises:

determining, by the second access network device, an I-RNTI rule; and
determining, by the second access network device, the I-RNTI of the terminal device according to the determined I-RNTI rule, wherein the I-RNTI indicates a corresponding I-RNTI rule.

18. The method according to claim 17, wherein

if a first bit of the I-RNTI is a first value, the I-RNTI indicates the I-RNTI rule before update by the second access network device, and the first bit comprises one or more bits; or
if a first bit of the I-RNTI is a second value, the I-RNTI indicates the updated I-RNTI rule of the second access network device, and the first bit comprises one or more bits.

19. A communication method, wherein the method comprises:

updating, by a second access network device, an inactive radio network temporary identifier I-RNTI rule;
sending, by the second access network device, a first paging message and/or a second paging message, wherein the first paging message indicates an access network device in a radio access network notification area of a terminal device in an inactive state to page the terminal device in the inactive state, and the second paging message is used by the second access network device to page the terminal device in the inactive state; and
performing, by the second access network device, at least one of the following:

triggering an I-RNTI of a first terminal device in an inactive state to be updated according to an updated I-RNTI rule;
triggering a second terminal device in an inactive state to enter an idle state; and
sending context information of a third terminal device in an inactive state to a first access network device, wherein the first access network device is an access network device that receives a paging response sent by the third terminal device.

20. The method according to claim 19, wherein the first paging message and/or the second paging message carry/carries a paging cause, and the paging cause is an I-RNTI rule change.

21. The method according to claim 19 or 20, wherein the triggering, by the second access network device, the I-RNTI of the first terminal device in the inactive state to be updated comprises:

allocating, by the second access network device, an I-RNTI to the first terminal device according to the updated I-RNTI rule; or
sending, by the second access network device, a third message to a third access network device, wherein the third access network device is an access network device that receives a paging response sent by the first terminal device, and the third message indicates the third access network device to allocate an I-RNTI to the first terminal device.

22. The method according to claim 21, wherein the third message carries a cause value that indicates the I-RNTI rule change.

23. The method according to claim 19 or 20, wherein the triggering, by the second access network device, the second terminal device in the inactive state to enter an idle state comprises:

releasing, by the second access network device, the second terminal device to the idle state; or
sending, by the second access network device, a fourth message to a fourth access network device, wherein the fourth access network device is an access network device that receives a paging response sent by the second terminal device, and the fourth message indicates the fourth access network device to release the second terminal device to the idle state.

24. The method according to claim 23, wherein the fourth message carries a cause value that indicates the I-RNTI rule change.

25. A communication method, wherein the method comprises:

receiving, by a first access network device, a first paging message from a second access network device, wherein the first paging message is used to page a terminal device in an inactive state;
sending, by the first access network device, a third paging message, wherein the third paging message is used to page the terminal device in the inactive state; and
performing, by the first access network device, at least one of the following:

updating an inactive radio network temporary identifier I-RNTI of a first terminal device in an inactive state; and
releasing a second terminal device in an inactive state to enter an idle state.

26. The method according to claim 25, wherein the first paging message and/or the third paging message carry/carries a paging cause, and the paging cause is an I-RNTI rule change.

27. The method according to claim 25 or 26, wherein the method further comprises:

before the updating, by the first access network device, the I-RNTI of the terminal device in the inactive state, receiving, by the first access network device, a third message from the second access network device, wherein the third message indicates the first access network device to allocate the I-RNTI to the first terminal device; or
before the releasing, by the first access network device, the terminal device in the inactive state to enter the idle state, receiving, by the first access network device, a fourth message from the second access network device, wherein the fourth message indicates a fourth access network device to release the second terminal device to the idle state.

28. The method according to claim 27, wherein the third message and/or the fourth message carry/carries a cause value that indicates the I-RNTI rule change.

29. A communication method, wherein the method comprises:

receiving, by a first access network device, a radio resource control RRC resume request from a terminal device, wherein the RRC resume request carries an inactive radio network temporary identifier I-RNTI of the terminal device, and the I-RNTI indicates a corresponding I-RNTI rule;
determining, by the first access network device according to the I-RNTI rule, an access network device corresponding to the I-RNTI; and
obtaining, by the first access network device, context information of a terminal device from the access network device.

30. The method according to claim 29, wherein

if a first bit of the I-RNTI is a first value, the I-RNTI indicates an I-RNTI rule before update by a second access network device, and the first bit comprises one or more bits; or

if a first bit of the I-RNTI is a second value, the I-RNTI indicates an updated I-RNTI rule of a second access network device, and the first bit comprises one or more bits.

31. A communication method, wherein the method comprises:

determining, by a second access network device, an inactive radio network temporary identifier I-RNTI rule; and

determining, by the second access network device, an I-RNTI of a terminal device according to the I-RNTI rule, wherein the I-RNTI indicates a corresponding I-RNTI rule.

32. The method according to claim 31, wherein

if a first bit of the I-RNTI is a first value, the I-RNTI indicates an I-RNTI rule before update by the second access network device, and the first bit comprises one or more bits; or

if a first bit of the I-RNTI is a second value, the I-RNTI indicates an updated I-RNTI rule of the second access network device, and the first bit comprises one or more bits.

33. A communication apparatus, wherein the apparatus comprises a module configured to implement the method according to any one of claims 1 to 9, or the apparatus comprises a module configured to implement the method according to any one of claims 10 to 18, or the apparatus comprises a module configured to implement the method according to any one of claims 19 to 24, or the apparatus comprises a module configured to implement the method according to any one of claims 25 to 28; or the apparatus comprises a module configured to implement the method according to claim 29 or 30; or the apparatus comprises a module configured to implement the method according to claim 31 or 32.

34. A computer-readable storage medium, wherein the computer-readable storage medium stores a program, and when the program is read and executed by one or more processors, the method according to any one of claims 1 to 9 may be implemented; or when the program is read and executed by one or more processors, the method according to any one of claims 10 to 18 may be implemented; or when the program is read and executed by one or more processors, the method according to any one of claims 19 to 24 may be implemented; or when the program is read and executed by one or more processors, the method according to any one of claims 25 to 28 may be implemented; or when the program is read and executed by one or more processors, the method according to claim 29 or 30 may be implemented; or when the program is read and executed by one or more processors, the method according to claim 31 or 32 may be implemented.

35. A communication system, wherein the system comprises a first access network device that can implement the method according to any one of claims 1 to 9 and a second access network device that can implement the method according to any one of claims 10 to 18; or the system comprises a second access network device that can implement the method according to any one of claims 19 to 24 and a first access network device that can implement the method according to any one of claims 25 to 28; or the system comprises a first access network device that can implement the method according to claim 29 or 30, and a second access network device that can implement the method according to claim 31 or 32.

Core network

RAN

gNB

CU

DU    DU

gNB

CU

DU    DU

FIG. 1

CU-CP

RRC

PDCP-C

E1

CU-UP

SDAP

PDCP-U

F1-C

F1-U

RLC

MAC

PHY

DU

FIG. 2

| Terminal device | | Target access network device | | Anchor access network device |
|---|---|---|---|---|

S301: RRC resume request message

S302: Retrieve UE context request message

S303: Response message

FIG. 3

| First access network device | | Second access network device |
|---|---|---|

S401: Message 1 indicating a first I-RNTI rule of the second access network device

S402: Determine that the first I-RNTI rule conflicts with an I-RNTI rule of another access network device

S403: Trigger the second access network device to update an I-RNTI rule

FIG. 4

**EP 4 322 641 A1**

First access
network device

Second access
network device

Message 1 indicating a first I-RNTI rule of
the second access network device

Determine that the first I-RNTI rule
conflicts with an I-RNTI rule of
another access network device

Message 2 indicating the second access
network device to update
an I-RNTI rule

Updated I-RNTI

FIG. 5

First access
network device

Second access
network device

OAM entity

At least one I-RNTI rule that
is allowed to be selected

Message 1 indicating a first I-
RNTI rule of the second access
network device

Determine that the first I-RNTI
rule conflicts with an I-RNTI
rule of another access network
device

Message 3 indicating that
I-RNTI rules conflict
with each other

Updated I-RNTI rule

Updated I-RNTI rule

FIG. 6

33

First access
network device

Second access
network device

S701: Update an I-RNTI rule

S702: First message indicating that at least
two I-RNTI rules of the second access
network device remain valid

S703: Determine, according to at least
one valid I-RNTI rule of the second
access network device,
access network devices corresponding
to an I-RNTI of a terminal device

S704: Send a Retrieve UE context
request message to at least one of the
determined access network devices

FIG. 7

| Terminal device | First access network device | Second access network device |
|---|---|---|

S801: I-RNTI rule 1

S802: Configure at least one first terminal device to enter an inactive state, and allocate an I-RNTI to the terminal device according to the I-RNTI rule 1

S803: Determine to update a current I-RNTI rule to an I-RNTI rule 2

S804: First message, where the first message carries the I-RNTI rule 2, and indicates that the I-RNTI rule 1 remains valid

S805: Acknowledgment message for the first message

S806: Configure at least one second terminal device to enter an inactive state, and allocate an I-RNTI to the terminal device according to the I-RNTI rule 2

S807: RRC resume request message

S808: Determine, according to the I-RNTI rule 1 and/or the I-RNTI rule 2, an access network device corresponding to the I-RNTI of the terminal device

S809: Send a context obtaining request message to the determined access network device

S810: Second message, where the second message indicates that the I-RNTI rule 1 is invalid

FIG. 8

Terminal device

Second access
network device

Access network device in
a radio access network
notification area of a
terminal device in an
inactive state

S1001: Update an I-RNTI rule

S1002b: Second paging message | S1002a: First paging message

S1003: Perform at least one of the following:
A: Trigger an I-RNTI of a first terminal device in
an inactive state to be updated according to an
updated I-RNTI rule
B: Trigger a second terminal device in an inactive
state to enter an idle state
C: Send context information of a third terminal
device in an inactive state to a first access network
device

FIG. 9

FIG. 10

Communication apparatus

Transceiver module — 1201

Processing module — 1202

FIG. 11

Communication apparatus

Communication interface — 1302

Processor — 1301

— 1304

— 1303

Memory

FIG. 12

## INTERNATIONAL SEARCH REPORT

International application No.

**PCT/CN2022/089642**

### A. CLASSIFICATION OF SUBJECT MATTER

H04W 68/00(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; VEN; USTXT; WPABS; 3GPP: 去激活态, 非激活态, 空闲态, 更新, 无线网络临时标识, 规则, 无线资源控制, 寻呼, inactive, radio network temporary identifier, I-RNTI, RNTI, idle, regula+, rule?, radio resource control, RRC, paging

### C. DOCUMENTS CONSIDERED TO BE RELEVANT

| Category* | Citation of document, with indication, where appropriate, of the relevant passages | Relevant to claim No. |
|---|---|---|
| X | CN 110831247 A (HUAWEI TECHNOLOGIES CO., LTD.) 21 February 2020 (2020-02-21) description, paragraphs 0115-0182, and figure 4 | 1, 6, 7, 25, 29, 31, 33-35 |
| A | CN 110831247 A (HUAWEI TECHNOLOGIES CO., LTD.) 21 February 2020 (2020-02-21) description, paragraphs 0115-0182, and figure 4 | 2-5, 8-24, 26-28, 30, 32 |
| A | US 2020314913 A1 (RASTEGARDOOST, N. et al.) 01 October 2020 (2020-10-01) entire document | 1-35 |
| A | WO 2021056596 A1 (HUAWEI TECHNOLOGIES CO., LTD.) 01 April 2021 (2021-04-01) entire document | 1-35 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 June 2022** | **28 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/089642**

| Patent document cited in search report | | | Publication date (day/month/year) | Patent family member(s) | | | Publication date (day/month/year) |
|---|---|---|---|---|---|---|---|
| CN | 110831247 | A | 21 February 2020 | None | | | |
| US | 2020314913 | A1 | 01 October 2020 | None | | | |
| WO | 2021056596 | A1 | 01 April 2021 | AU | 2019467927 | A1 | 21 April 2022 |

Form PCT/ISA/210 (patent family annex) (January 2015)

**EP 4 322 641 A1**

**Patent documents cited in the description**

- CN 202110481627